# EUROPÄISCHE PATENTSCHRIFT

(11) **EP 4 306 912 B1**
(45) Veröffentlichungstag und Bekanntmachung des Hinweises auf die Patenterteilung: **29.10.2025**
(21) Anmeldenummer: 22184530.8
(22) Anmeldetag: 12.07.2022
(51) Int. Cl.: G01F 1/00

(54) **VERBRENNUNGSVORRICHTUNG MIT MASSENSTROMSENSOR**
COMBUSTION DEVICE WITH MASS FLOW SENSOR
DISPOSITIF DE COMBUSTION POURVU DE CAPTEUR DE DÉBIT MASSIQUE

(43) Veröffentlichungstag der Anmeldung: 17.01.2024
(73) Patentinhaber: Siemens Aktiengesellschaft, 80333 München (DE)
(72) Erfinder: Lochschmied, Rainer, 76287 Rheinstetten-Forchheim (DE); Schmanau, Mike, 76316 Malsch (DE); Schmiederer, Bernd, 76149 Karlsruhe (DE)
(74) Vertreter: Siemens Patent Attorneys

(56) Entgegenhaltungen:
- EP-A1- 2 105 714
- EP-B1- 3 301 362
- WO-A1-2013/030198
- DE-A1- 102017 128 953
- DE-U1- 202019 100 263

## Beschreibung

Die vorliegende Offenbarung behandelt Kondensation an Massenstromsensoren einer Verbrennungsvorrichtung. Die vorliegende Offenbarung behandelt insbesondere die Kondensation aufgrund feuchter Luft an einem Massenstromsensor in einem Seitenkanal einer Verbrennungsvorrichtung.

Aus einem europäischen Patent EP3301362B1 ist ein Seitenkanal bekannt, welcher sich seitlich an einen Zufuhrkanal einer Verbrennungsvorrichtung anschliesst. Das europäische Patent EP3301362B1, Verfahren zur Regelung turbulenter Strömungen, wurde am 30. September 2016 angemeldet und am 25. März 2020 erteilt. In dem Seitenkanal aus EP3301362B1 ist ein Sensor angeordnet. Anhand des Sensors wird die Strömung eines Fluides wie beispielsweise Luft erfasst. Aufgrund der Fluidverbindung zwischen Seitenkanal und Zufuhrkanal kann aus der Strömung im Seitenkanal auf die Strömung durch den Zufuhrkanal zurückgeschlossen werden.

Ein weiteres europäisches Patent EP3301363B1 wurde am 31. Mai 2017 angemeldet und am 28. August 2019 erteilt. EP3301363B1 behandelt eine Verbrennungsreinrichtung mit Brenner und eine Vorrichtung zur Durchflussmessung turbulenter Strömungen.

EP3301363B1 offenbart wie EP3301362B1 einen Seitenkanal, welcher sich an einen Luftkanal anschliesst. In den Seitenkanal aus EP3301362B1 ragt ein Massenstromsensor hinein. EP3301363B1 beansprucht eine Anschlussstelle des Seitenkanales, über welche der Seitenkanal mit dem Zufuhrkanal in Fluidverbindung steht. Auf der anderen Seite des Seitenkanales befindet sich ein Auslass, welcher direkt in den Brennerraum oder in den Aussenbereich der Verbrennungsvorrichtung führt.

Eine Verbrennungsvorrichtung mit Zufuhrkanal und Seitenkanal ist weiterhin im europäischen Patent EP3301364B1 offenbart. EP3301364B1 behandelt ebenso wie EP3301363B1 eine Verbrennungsreinrichtung mit Brenner und eine Vorrichtung zur Durchflussmessung turbulenter Strömungen. Das europäische Patent EP3301364B1 wurde am 7. Juni 2017 angemeldet und am 7. August 2019 erteilt. Es wird eine Verbrennungsvorrichtung mit Zufuhrkanal und Seitenkanal beansprucht, wobei in den Zufuhrkanal ein Massenstromsensor hineinragt. An der Verbindung zwischen Zufuhrkanal und Seitenkanal ist eine Stausonde angeordnet. Jene Stausonde weist einen Teilbereich auf, welcher dem Auslass des Zufuhrkanales zugewandt ist. Dabei ist jener Teilbereich, welcher dem Auslass des Zufuhrkanales zugewandt ist, zugleich Einlass der Stausonde. Die Stausonde und der Zufuhrkanal ermöglichen demnach den Eintritt eines Fluides wie beispielsweise Luft über einen stromabwärts gerichteten Einlass der Stausonde.

In Anordnungen mit Seitenkanal und Massenstromsensor im Seitenkanal ist es möglich, dass am Massenstromsensor Kondensation auftritt. Weiterhin kann im Seitenkanal Kondensation auftreten. Kondensation tritt auf, wenn die Temperatur des Fluides wie beispielsweise Luft im Seitenkanal und/oder in der Umgebung des Massenstromsensors zumindest lokal seinen Taupunkt unterschreitet. Dabei ist die Temperatur des Taupunktes eine Funktion der Luftfeuchtigkeit und/oder des Partialdruckes des Wasserdampfes *p_{D}* in einem trockenem Fluid, beispielsweise Luft.

Beispielsweise kann eine Oberfläche des Seitenkanales und/oder des Massenstromsensors eine Temperatur aufweisen, welche unterhalb der Taupunkttemperatur des im Fluid enthaltenen Wasserdampfes liegt. Insbesondere kann eine Oberfläche des Seitenkanales und/oder des Massenstromsensors eine Temperatur aufweisen, welche unterhalb der Taupunkttemperatur des in der Zuluft enthaltenen Wasserdampfes liegt. An einer solchen Oberfläche besteht dann die Gefahr von Kondensation. In der Folge können elektrische Kontakte innerhalb des Sensors durch Feuchtigkeit kurzgeschlossen werden. Es ist auch möglich, dass ein anemometrischer Sensor infolge der Benetzung von Oberflächen mit Wasser falsche, ungenaue und/oder keine Messergebnisse bereitstellt.

Zur Vermeidung von Kondensation am oder um den Sensor wäre es möglich, die Oberflächen in der Umgebung des Sensors auf eine Temperatur oberhalb des Taupunktes zu beheizen. Die zu installierende Heizvorrichtung stellt derweil eine zusätzliche Komponente dar, deren Ausfall die Betriebssicherheit der Anlage infrage stellen kann. Zudem fallen im Betrieb zusätzliche Kosten für die Beheizung an.

Ferner ist denkbar, anstelle von Flusssensoren wie Massenstromsensoren Drucksensoren einzusetzen. Dabei kommt zum Tragen, das Drücke typischer Weise strömungslos erfasst werden. Drucksensoren werfen deshalb im Fall von Kondensation weniger Probleme auf als anemometrische Sensoren. Derweil liefern Drucksensoren zumindest nicht direkt Signale, welche auf eine Strömung in einem Zufuhrkanal schliessen lassen.

Ziel der vorliegenden Offenbarung der Erfindung ist eine Anordnung zur Vermeidung von Kondensation und/oder Betauung an einem Flusssensor sowie in der Umgebung des Sensors. Zudem soll ein stabiles Strömungsteilungsverhältnis zwischen Zufuhrkanal und Seitenkanal gewährleistet sein. Insbesondere soll sich durch die Vermeidung von Kondensation und/oder Betauung das Strömungsverhalten nicht ändern.

### Zusammenfassung

Der Gegenstand der hier beanspruchten Erfindung ist im Anspruch 1 definiert. Weitere Entwicklungen der Erfindung sind in den Ansprüchen 2-15 angegeben.

Die vorliegende Offenbarung lehrt eine Verbrennungsvorrichtung mit einem Zufuhrkanal und einem Seitenkanal zum Zufuhrkanal. Im Seitenkanal ist ein Massenstromsensor angeordnet. Dabei sind Kondensation und/oder Betauung am oder um den Massenstromsensor zu vermeiden. Der Seitenkanal, in welchem sich der Massenstromsensor befindet, wird dazu teilweise innerhalb des Zufuhrkanales angeordnet. Das heisst, dass ein erster Abschnitt des Seitenkanales sich innerhalb des Zufuhrkanales befindet. Ein zweiter Abschnitt des Seitenkanales befindet sich ausserhalb des Zufuhrkanales. Mithin befindet sich der Massenstromsensor innerhalb der Wände, welche den Zufuhrkanal nach aussen begrenzen.

Zunächst wird davon ausgegangen, dass das Fluid im Zufuhrkanal eine Temperatur oberhalb der Taupunkttemperatur des im Fluid enthaltenen Wasserdampfes aufweist. Insbesondere wird davon ausgegangen, dass das Fluid im Zufuhrkanal eine Temperatur oberhalb der Taupunkttemperatur des in der Zuluft enthaltenen Wasserdampfes aufweist. Durch die Anordnung des ersten Abschnittes des Seitenkanales und des Massenstromsensors innerhalb des Zufuhrkanales weisen das Fluid im Zufuhrkanal und der Seitenkanal die gleichen Temperaturen auf. Ebenso weist der Massenstromsensor die gleiche Temperatur wie das Fluid im Zufuhrkanal und wie der Seitenkanal auf. Der Wasserdampf im Fluid kann nicht mehr kondensieren, weil die Wände des Seitenkanales eine Temperatur aufweisen, welche nicht tiefer als die Temperatur des Fluides ist. Der Wasserdampf im Fluid kann insbesondere nicht mehr kondensieren, weil die Wände des Seitenkanales eine Temperatur aufweisen, welche nicht tiefer als die Temperatur der Zuluft sind. Der Wasserdampf im Fluid kann weiterhin nicht kondensieren, weil der Massenstromsensor eine Temperatur aufweist, welche nicht tiefer als die Taupunkttemperatur des Wasserdampfes im Fluid ist. Der Wasserdampf im Fluid kann insbesondere nicht kondensieren, weil der Massenstromsensor eine Temperatur aufweist, welche nicht tiefer als die Taupunkttemperatur des Wasserdampfes in der Zuluft ist.

Gemäss einem weiteren Aspekt der vorliegenden Offenbarung werden der Seitenkanal und der Zufuhrkanal in einem Volumen mit homogener Temperaturverteilung angeordnet.

Insbesondere ist vorgesehen, dass der Seitenkanal und der Zufuhrkanal in einem Volumen mit homogener Verteilung des Partialdruckes des Wasserdampfes *p_{D}* angeordnet sind. Mithin ist auch der Massenstromsensor in jenem Volumen mit homogener Verteilung von Temperatur und/oder Partialdruck des Wasserdampfes *p_{D}* angeordnet. Durch die homogene Verteilung von Temperatur und/oder Partialdruck des Wasserdampfes *p_{D}* kondensiert das Fluid entweder überall oder aber an keinem Ort innerhalb des Volumens mit homogener Verteilung. Praktisch wird die Anordnung innerhalb eines Volumens mit homogener Verteilung der Temperatur und/oder des Partialdruckes des Wasserdampfes *p_{D}* erreicht, indem die jeweiligen Abstände zwischen
- dem Seitenkanal,
- dem Einlass des Zufuhrkanales und
- dem Massenstromsensor

klein gewählt werden. Allenfalls sind auch die jeweiligen Abstände zwischen
   - dem Seitenkanal,
   - dem Einlass des Zufuhrkanales und
   - dem Massenstromsensor
klein zu wählen.

Es ist weiterhin vorgesehen, dass der Seitenkanal ein Umgehungskanal ist, der ein Fluid aus dem Zufuhrkanal entnimmt und es wieder in den Zufuhrkanal zurückströmen lässt. Zusätzlich kann der als Umgehungskanal ausgebildete Seitenkanal mit einer Schicht aus einem wärmedämmenden Material isoliert sein. Durch diese Massnahmen wird vermieden, dass innerhalb des Seitenkanales und insbesondere an den Wänden des Seitenkanales Temperaturen unterhalb der Taupunkttemperatur vom im Fluid enthaltenen Wasserdampf auftreten. Dadurch wird insbesondere vermieden, dass innerhalb des Seitenkanales und insbesondere an den Wänden des Seitenkanales Temperaturen unterhalb der Taupunkttemperatur des in der Zuluft enthaltenen Wasserdampfes auftreten. Weiterhin wird durch diese Massnahmen vermieden, dass am Massenstromsensor Temperaturen unterhalb der Taupunkttemperatur vom im Fluid enthaltenen Wasserdampf auftreten. Insbesondere wird dadurch vermieden, dass am Massenstromsensor Temperaturen unterhalb der Taupunkttemperatur des in der Zuluft enthaltenen Wasserdampfes auftreten.

### Kurze Beschreibung der Zeichnungen

Verschiedene Details werden dem Fachmann anhand der folgenden detaillierten Beschreibung zugänglich. Die einzelnen Ausführungsformen sind dabei nicht einschränkend. Die Zeichnungen, welche der Beschreibung beigefügt sind, lassen sich wie folgt beschreiben:
FIG 1 zeigt schematisch eine Verbrennungsvorrichtung mit einem Seitenkanal zu einem Zufuhrkanal zwischen Gebläse und Brennerraum.
FIG 2 zeigt schematisch eine Verbrennungsvorrichtung mit einem Seitenkanal zu einem Zufuhrkanal zwischen einer Klappe und einem Gebläse.
FIG 3 veranschaulicht einen Seitenkanal, welcher in einen Zufuhrkanal hineinragt.
FIG 4 veranschaulicht, nicht erfindungsgemäß, eine Verbrennungsvorrichtung mit Zufuhrkanal und mit Seitenkanal. wobei der Zufuhrkanal und der Seitenkanal an die gleiche Umgebungsluft angeschlossen sind.
FIG 5 zeigt schematisch, nicht erfindungsgemäß, einen Seitenkanal zu einem Zufuhrkanal, wobei der Seitenkanal einen Umgehungskanal des Zufuhrkanales bildet.

### Detaillierte Beschreibung

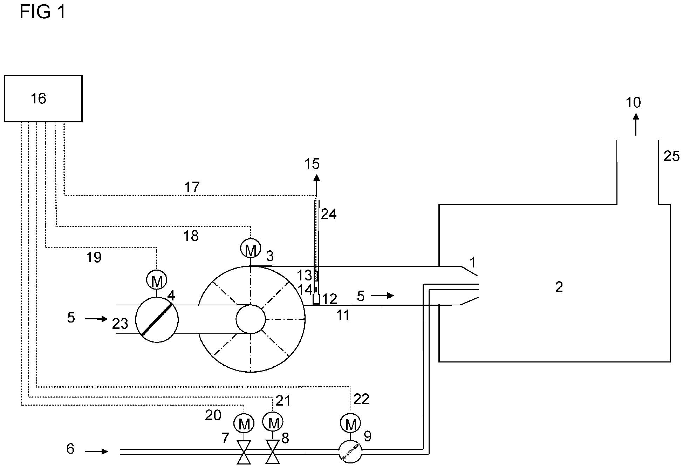

FIG 1 zeigt ein System umfassend einen Brenner 1, einen Wärmeverbraucher 2, ein Gebläse 3 mit einstellbarer Drehzahl und eine motorisch verstellbare Luftklappe 4. Die motorisch verstellbare Klappe 4 ist nach dem Lufteinlass 23 angeordnet. Der Wärmeverbraucher 2 (Wärmetauscher) kann beispielsweise ein Warmwasser-Heizkessel sein. Die Zufuhr (Teilchenstrom und/oder Massenstrom) 5 des Fluides Luft kann gemäss FIG 1 durch die motorisch verstellbare Luftklappe 4 eingestellt werden. Die Zufuhr (Teilchenstrom und/oder Massenstrom) 5 des Fluides Luft kann gemäss FIG 1 auch durch eine Drehzahlvorgabe anhand einer Signalleitung 18 des Gebläses 3 eingestellt werden.

Er kann bei fehlender Luftklappe 4 und/oder fest stehender Luftklappe die Luftzufuhr 5 auch nur durch die Drehzahl des Gebläses 3 einjustiert werden. Zur Einjustierung der Drehzahl des Gebläses 3 kommt beispielsweise Pulsweitenmodulation infrage. Gemäss einer anderen Ausführungsform ist der Motor des Gebläses 3 an einen Umrichter angeschlossen. Die Drehzahl des Gebläses 3 wird mithin über die Frequenz des Umrichters einjustiert. Gemäss einer anderen Ausführungsform läuft das Gebläse bei einer festen, nicht veränderbaren Drehzahl. Die Luftzufuhr 5 wird durch die Position der Luftklappe 4 festgelegt. Ausserdem sind weitere Aktoren möglich, welche die Luftzufuhr 5 verändern. Dabei kann es sich beispielsweise um eine Düsenstockverstellung des Brenners oder eine verstellbare Klappe im Abgasweg handeln.

Die Brennstoffzufuhr 6 (beispielsweise Teilchenstrom und/oder Massenstrom) wird durch eine Brennstoffklappe 9 eingestellt. Gemäss einer Ausführungsform ist die Brennstoffklappe 9 ein (motorisch verstellbares) Ventil.

Als Brennstoff kommen beispielsweise brennbare Gase wie Erdgas und/oder Propangas und/oder Wasserstoff infrage. Als Brennstoff kommt auch ein flüssiger Brennstoff wie Heizöl infrage. In diesem Fall wird die Brennstoffklappe 9 durch einen motorisch einstellbaren Öldruckregler im Rücklauf der Öldüse ersetzt. Die Sicherheitsabschaltfunktion und/oder Sicherheitsschliessfunktion wird durch die redundant vorhandenen Sicherheitsabsperrventile 7, 8 implementiert. Gemäss einer speziellen Ausführungsform sind die Sicherheitsabsperrventile 7,8 und die Brennstoffklappe 9 als integrierte Einheit realisiert. Vorteilhafterweise kann die Integration auch so gestaltet sein, dass ein Aktor ein reines Sicherheitsabsperrventil ist und Brennstoffklappe und zweites Sicherheitsabsperrventil in einem weiteren Aktor zusammengefasst sind.

Brennstoff wird im und/oder vor dem Brenner 1 der Luftzufuhr 5 beigemischt. Das Gemisch wird im Feuerraum des Wärmeverbrauchers 2 verbrannt. Die Wärme wird im Wärmeverbraucher 2 weitertransportiert. Beispielsweise wird erwärmtes Wasser über eine Pumpe an Heizelemente abgeführt und/oder bei Industriefeuerungen ein Gut (direkt) erwärmt. Der Abgasstrom 10 wird über einen Abgasweg 25, beispielsweise einen Schornstein, abgeführt.

Eine Regel- und/oder Steuer- und/oder Überwachungseinrichtung 16 koordiniert alle Aktoren so, dass die richtige Zufuhr 6 an Brennstoff über die Stellung der Brennstoffklappe 9 zur entsprechenden Luftzufuhr 5 eingestellt wird. Das heisst, dass die Zufuhr 5 an Luft (Massenstrom und/oder Teilchenstrom) im Zufuhrkanal 11 für jeden Punkt der Brennerleistung eingestellt wird. Damit ergibt sich die gewünschte Luftzahl λ. Gemäss einer speziellen Ausführungsform ist die Regel- und/oder Steuer- und/oder Überwachungseinrichtung 16 als Mikrokontroller ausgeführt. Weiterhin kann die Regel- und/oder Steuer- und/oder Überwachungseinrichtung 16 als Mikrokontrollerschaltung ausgeführt sein. Gemäss einer weiteren speziellen Ausführungsform ist die Regel- und/oder Steuer- und/oder Überwachungseinrichtung 16 als Mikroprozessor ausgeführt. Weiterhin kann die Regel- und/oder Steuer- und/oder Überwachungseinrichtung 16 als Mikroprozessorschaltung ausgeführt sein.

Hierzu stellt die Regel- und/oder Steuer- und/oder Überwachungseinrichtung 16 das Gebläse 3 über die Signalleitung 18 auf die in der Einrichtung 16 hinterlegten Werte ein. Ebenso stellt die Regel- und/oder Steuer- und/oder Überwachungseinrichtung 16 die Luftklappe 4 über die Signalleitung 19 auf die in der Einrichtung 16 hinterlegten Werte ein. Die Werte sind beispielsweise in Form einer Kennlinie oder Tabelle in der Regel- und/oder Steuer- und/oder Überwachungseinrichtung 16 hinterlegt. Vorzugsweise umfasst die Regel- und/oder Steuer- und/oder Überwachungseinrichtung 16 einen (nicht-flüchtigen) Speicher. In dem Speicher sind jene Werte hinterlegt. Die Stellung der Brennstoffklappe 9 wird über die Signalleitung 22 vorgegeben. Im Betrieb werden die Sicherheitsabsperrventile 7, 8 über die Signalleitungen 20, 21 eingestellt.

Sollen Fehler einer Klappe 4, 9 und/oder im Gebläse 3 aufgedeckt werden, so kann dies durch eine sicherheitsgerichtete Rückmeldung erfolgen. Rückgemeldet wird die Position der Luftklappe 4 über die Signalleitung 19 für die Luftklappe 4 und/oder über die Signalleitung 22 für die Brennstoffklappe 9. Beispielsweise können so Fehler in der vorzugsweise elektronischen Schnittstelle oder Steuereinrichtung der Klappe 4 oder des Gebläses 3 aufgedeckt werden. Die Signalleitungen 19 und 22 können bidirektionale Signalleitungen sein.

Eine sicherheitsgerichtete Positionsmeldung kann beispielsweise über redundante Positionsgeber realisiert werden. Falls eine sicherheitsgerichtete Rückmeldung über die Drehzahl erforderlich ist, kann diese über die (bidirektionale) Signalleitung 18 unter Verwendung von (sicherheitsgerichteten) Drehzahlgebern erfolgen. Dazu können beispielsweise redundante Drehzahlgeber verwendet werden und/oder die gemessene Drehzahl mit der Solldrehzahl verglichen werden. Die Ansteuer- und Rückmeldesignale können über unterschiedliche Signalleitungen und/oder über einen bidirektionalen Bus übermittelt werden.

Vor dem Brenner ist ein Seitenkanal 24 angebracht. Durch den Seitenkanal 24 strömt eine (geringe) Strömungsmenge 15 nach aussen ab. Beispielsweise fliesst die Strömungsmenge 15 dabei in den Raum ab, aus dem das Gebläse 3 die Luft anzieht. Gemäss einer anderen Ausführungsform fliesst die abströmende Strömungsmenge 15 in den Feuerraum des Wärmeverbrauchers 2 ab. Gemäss einer anderen Ausführungsform fliesst die Luft zurück in den Zufuhrkanal 11. In diesem Fall ist zwischen Abgriff und Rückführung eine feste oder motorisch verstellbare Strömungsbegrenzung beispielsweise in Form der Klappe 4 im Zufuhrkanal 11 angeordnet.

Strömt die Strömungsmenge nach aussen ab, so bildet der Seitenkanal 24 zusammen mit dem Brenner 1 und dem Abgasweg 25 des Wärmeverbrauchers 2 einen Strömungsteiler. Für einen festgelegten Strömungsweg durch Brenner 1 und Abgasweg 25 fliesst jeweils für einen Wert der Luftzufuhr 5 (umkehrbar eindeutig) ein zugehöriger Wert eines Luftstromes 15 durch den Seitenkanal 24 ab. Der Strömungsweg durch Brenner 1 und Abgasweg 25 muss dabei nur für jeden Punkt der Brennerleistung festgelegt sein. Er kann also über der Brennerleistung (und mithin über die Luftzufuhr 5) variieren.

Der Seitenkanal 24 kann in Bezug auf den Zufuhrkanal 11 je nach Druckverhältnissen sowohl einen Abströmkanal als auch einen Zuströmkanal umfassen. Der Seitenkanal 24 kann insbesondere in Bezug auf den Zufuhrkanal 11 und je nach Druckverhältnissen sowohl ein Abströmkanal als auch ein Zuströmkanal sein.

Im Seitenkanal 24 kann ein Strömungsbegrenzungselement (in Form einer Blende) 14 angebracht sein. Mit dem Strömungsbegrenzungselement 14 wird die Strömungsmenge 15 des Strömungsteilers definiert. Das Strömungsbegrenzungselement 14 ist vorzugsweise eine Blende. Der Fachmann erkennt, dass die Funktion des Strömungsbegrenzungselementes 14 als definierter Strömungswiderstand auch durch ein Röhrchen definierter Länge (und/oder Durchmesser) realisiert werden kann. Der Fachmann erkennt weiterhin, dass auch anhand eines laminaren Flusselementes und/oder durch einen anderen definierten Strömungswiderstand die Funktion des Strömungsbegrenzungselementes 14 realisiert werden kann.

Gemäss einer speziellen Ausführungsform ist die Durchtrittsfläche des Strömungsbegrenzungselementes 14 motorisch verstellbar. Zur Vermeidung und/oder Behebung von Verstopfungen durch Schwebeteilchen kann die Durchtrittsfläche des Strömungsbegrenzungselementes 14 verstellt werden. Insbesondere kann das Strömungsbegrenzungselement 14 geöffnet und/oder geschlossen werden. Die Durchtrittsfläche des Strömungsbegrenzungselementes 14 wird vorzugsweise mehrfach verstellt, um Verstopfungen zu vermeiden und/oder zu beheben.

Die Strömungsmenge 15 im Seitenkanal 24 hängt von der Durchtrittsfläche des Strömungsbegrenzungselementes 14 ab. Deshalb ist der Wert der Luftzufuhr 5 über im (nicht-flüchtigen) Speicher hinterlegte Kennwerte für die Messwerte der Strömungsmenge 15 bei jeder verwendeten Durchtrittsfläche des Strömungsbegrenzungselementes 14 hinterlegt. Damit kann die Luftzufuhr 5 bestimmt werden.

Mit dieser Anordnung ist die Strömungsmenge 15 (Teilchenstrom und/oder Massenstrom) durch den Seitenkanal 24 ein Mass für die Luftzufuhr 5 zum Brenner 1. Dabei werden Einflüsse aufgrund von Dichteänderungen der Luft beispielsweise durch Änderungen des Absolutdruckes und/oder der Lufttemperatur durch einen Massenstromsensor 13 erfasst. Normalerweise ist die Strömungsmenge 15 (sehr) viel kleiner als die Luftzufuhr 5.

Mithin wird die Luftzufuhr 5 (praktisch) nicht durch den Seitenkanal 24 beeinflusst. Gemäss einer speziellen Ausführungsform ist die Strömungsmenge 15 durch den Seitenkanal 24 mindestens um einen Faktor einhundert geringer als die Luftzufuhr 5 durch den Zufuhrkanal 11. Bevorzugt ist die Strömungsmenge 15 durch den Seitenkanal 24 mindestens um einen Faktor eintausend geringer als die Luftzufuhr 5 durch den Zufuhrkanal 11. Besonders bevorzugt ist die Strömungsmenge 15 durch den Seitenkanal 24 mindestens um einen Faktor zehntausend geringer als die Luftzufuhr 5 durch den Zufuhrkanal 11.

Massenstromsensoren 13 erlauben die Messung bei grossen Flussgeschwindigkeiten speziell in Verbindung mit Verbrennungsvorrichtungen im Betrieb. Typische Werte solcher Flussgeschwindigkeiten liegen in Bereichen zwischen 0.1 Meter pro Sekunde und 5 Meter pro Sekunde. Es sind auch Flussgeschwindigkeiten von 10 Meter pro Sekunde, 15 Meter pro Sekunde, 20 Meter pro Sekunde, oder sogar 100 Meter pro Sekunde möglich. Massenstromsensoren 13, welche sich für die vorliegende Offenbarung eignen, sind beispielsweise OMRON^{®} D6F-W oder Typ SENSOR TECHNICS^{®} WBA Sensoren. Der nutzbare Bereich dieser Sensoren beginnt typisch bei Geschwindigkeiten zwischen 0.01 Meter pro Sekunde und 0.1 Meter pro Sekunde. Der nutzbare Bereich dieser Sensoren endet bei einer Geschwindigkeit wie beispielsweise 5 Meter pro Sekunde, 10 Meter pro Sekunde oder 15 Meter pro Sekunde. Der nutzbare Bereich dieser Sensoren kann sogar bei einer Geschwindigkeit wie 20 Meter pro Sekunde oder 100 Meter pro Sekunde enden. Mit anderen Worten, es können untere Grenzen wie 0.1 Meter pro Sekunde kombiniert werden mit oberen Grenzen wie 5 Meter pro Sekunde oder Meter pro Sekunde. Ferner können untere Grenzen wie 0.1 Meter pro Sekunde kombiniert werden mit oberen Grenzen wie 15 Meter pro Sekunde oder 20 Meter pro Sekunde. Weiterhin können untere Grenzen wie 0.1 Meter pro Sekunde kombiniert werden mit oberen Grenzen wie sogar 100 Meter pro Sekunde.

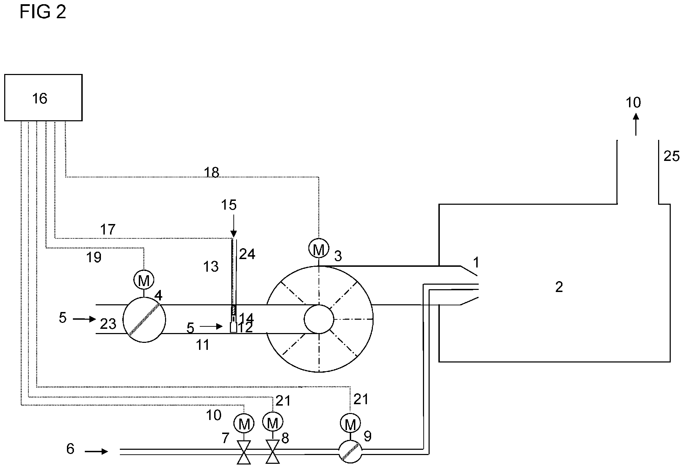

FIG 2 zeigt als gegenüber FIG 1 geänderte Ausführungsform ein System mit einem Seitenkanal 24 vor dem Gebläse 3. Im Gegensatz zu FIG 1 strömt die Strömungsmenge 15 saugseitig über den Massenstromsensor 13 zu. Das Gebläse 3 erzeugt an diesem Ort einen Unterdruck. Mit anderen Worten, der Seitenkanal 24 ist ein Zuströmkanal.

Änderungen der Gasmenge als Resultat von Verstellungen der motorisch verstellbaren Brennstoffklappe 9 beeinflussen die Strömungsmenge 15 durch den Seitenkanal 24 nicht. Sollte der Unterdruck in der Zuführung des Gebläses 3 nicht ausreichen, so kann mit einem Strömungsbegrenzungselement am Lufteinlass 23 der Gebläsezuführung ein definierter Strömungswiderstand erzeugt werden. Ein Strömungsbegrenzungselement am Lufteinlass 23 kann beispielsweise eine Luftklappe 4 umfassen. Das Strömungsbegrenzungselement am Lufteinlass 23 kann beispielsweise auch eine Luftklappe 4 sein. Die Luftklappe 4 ist dann praktisch als motorisch verstellbares Strömungsbegrenzungselement ausgeführt. Vorzugsweise ist die Luftklappe 4 als motorisch verstellbares Strömungsbegrenzungselement mit Rückmeldung ausgeführt. Zusammen mit Strömungsbegrenzungselement 14 im Seitenkanal 24 wird ein Strömungsteiler realisiert.

In FIG 2 kann die Luftzufuhr 5 über das Gebläse 3 mit Hilfe der Signalleitung 18 eingestellt werden. Der Fachmann erkennt, dass eine (motorisch verstellbare) Luftklappe 4 verbaut werden kann. Eine solche Luftklappe 4 ist in FIG 2 saugseitig zum Gebläse 3 angeordnet. Die Luft durch den Seitenkanal wird dabei von aussen zur Anschlussstelle 12 angesaugt, da an dieser durch Gebläse 3 und Luftklappe 4 ein Unterdruck erzeugt wird. Die Luftklappe 4 kann aber auch druckseitig zum Gebläse 3 angeordnet sein oder ganz weggelassen werden. Dann sorgt für eine saugseitige Anordnung gemäss FIG 2 eine feste Blende im Zufuhrkanal für den Unterdruck an der Anschlussstelle 12.

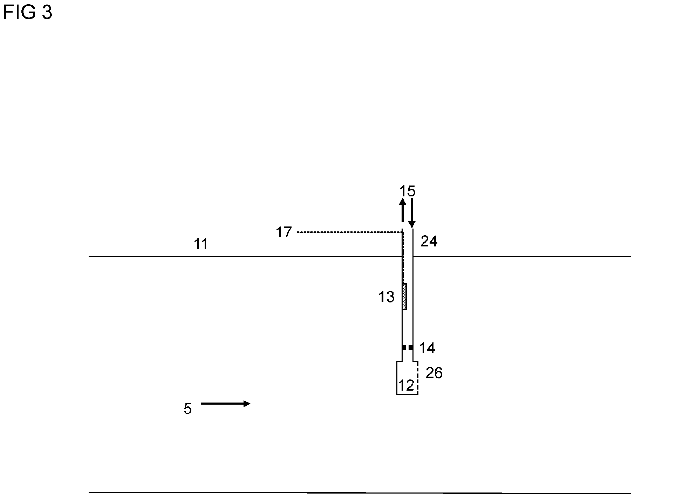

FIG 3 zeigt einen Seitenkanal 4, welcher in einen Zufuhrkanal 11 hineinragt. Der Seitenkanal 24 weist ein erstes Ende auf, welches innerhalb des Zufuhrkanales 11 angeordnet ist. Der Seitenkanal 24 weist ein zweites Ende auf, welches ausserhalb des Zufuhrkanales 11 angeordnet ist. Das zweite Ende des Seitenkanales 24 ist verschieden vom ersten Ende des Seitenkanales 24. Ebenso weist der Seitenkanal 24 einen ersten Abschnitt auf, der innerhalb des Zufuhrkanales 11 angeordnet ist. Weiterhin weist der Seitenkanal 24 einen zweiten Abschnitt auf, der ausserhalb des Zufuhrkanales 11 angeordnet ist. In einer besonderen Ausführungsform besteht der Seitenkanal 24 aus dem ersten Abschnitt innerhalb des Zufuhrkanales 11 und dem zweiten Abschnitt ausserhalb des Zufuhrkanales 11.

Gemäss FIG 3 ist eine Anschlussstelle 12 des Seitenkanales 24 innerhalb des Zufuhrkanales 11 angeordnet. In einer Ausführungsform umfasst die Anschlussstelle 12 eine Stausonde. In einer speziellen Ausführungsform ist die Anschlussstelle 12 eine Stausonde. Öffnungen 26 ermöglichen eine Fluidverbindung zwischen Zufuhrkanal 11 und Seitenkanal 24.

Bevorzugt ist mindestens ein weiteres Element ausgewählt aus
- einem Strömungsbegrenzungselement 14, beispielsweise einer Blende, und
- einem Massenstromsensor 13
innerhalb des Zufuhrkanales 11 angeordnet.

In FIG 3 sind sowohl das Strömungsbegrenzungselement 14 in Form einer Blende und der Massenstromsensor 13 innerhalb des Zufuhrkanales 11 angeordnet.

Insbesondere ist vorgesehen, dass der Zufuhrkanal 11 ein Rohr mit einer Innenwand und einer Aussenwand umfasst. Die Innenwand des Rohres definiert eine Innenseite des Zufuhrkanales 11. Die Aussenwand des Rohres definiert eines Aussenseite des Zufuhrkanales 11. Die Innenseite des Zufuhrkanales 11 ist verschieden von der Aussenseite des Zufuhrkanales 11. Eine Anordnung umfassend eines oder mehrere Elemente ausgewählt aus
- der Anschlussstelle 12,
- dem Strömungsbegrenzungselement 14, beispielsweise einer Blende,
- dem Massenstromsensor 13,
- dem ersten Abschnitt des Seitenkanales 24,
innerhalb des Zufuhrkanales 11 ist mithin an der Innenseite des Zufuhrkanales 11. Vorzugsweise ragt der Seitenkanal 24 mindestens 5 Millimeter oder mindestens 10 Millimeter oder mindestens 20 Millimeter in den Zufuhrkanal 11 hinein. Mit anderen Worten, der erste Abschnitt des Seitenkanales 24 ragt mindestens 5 Millimeter oder mindestens 10 Millimeter oder mindestens 20 Millimeter in den Zufuhrkanal 11 hinein. Insbesondere beträgt der kürzeste Abstand zwischen dem ersten Ende des Seitenkanales 24 innerhalb des Zufuhrkanales 11 und der Innenwand des Rohres mindestens 5 Millimeter oder mindestens 10 Millimeter oder mindestens 20 Millimeter. Eine Anordnung des Seitenkanales 24 innerhalb des Zufuhrkanales 11 vermeidet Betauung beispielsweise des Massenstromsensors 13.

Weiterhin ist vorgesehen, dass der Zufuhrkanal 11 ein Rohr mit einer Innenwand und einer Aussenwand ist. Die Innenwand des Rohres definiert eine Innenseite des Zufuhrkanales 11.

Die Aussenwand des Rohres definiert eines Aussenseite des Zufuhrkanales 11. Die Innenseite des Zufuhrkanales 11 ist verschieden von der Aussenseite des Zufuhrkanales 11. Eine Anordnung umfassend eines oder mehrere Elemente ausgewählt aus
- der Anschlussstelle 12,
- dem Strömungsbegrenzungselement 14, beispielsweise einer Blende,
- dem Massenstromsensor 13,
- dem ersten Abschnitt des Seitenkanales 24,
innerhalb des Zufuhrkanales 11 ist mithin an der Innenseite des Zufuhrkanales 11. Vorzugsweise ragt der Seitenkanal 24 mindestens 5 Millimeter oder mindestens 10 Millimeter oder mindestens 20 Millimeter in den Zufuhrkanal 11 hinein. Mit anderen Worten, der erste Abschnitt des Seitenkanales 24 ragt mindestens 5 Millimeter oder mindestens 10 Millimeter oder mindestens 20 Millimeter in den Zufuhrkanal 11 hinein. Insbesondere beträgt der kürzeste Abstand zwischen dem ersten Ende des Seitenkanales 24 innerhalb des Zufuhrkanales 11 und der Innenwand des Rohres mindestens 5 Millimeter oder mindestens 10 Millimeter oder mindestens 20 Millimeter. Eine Anordnung des Seitenkanales 24 innerhalb des Zufuhrkanales 11 vermeidet Betauung beispielsweise des Massenstromsensors 13.

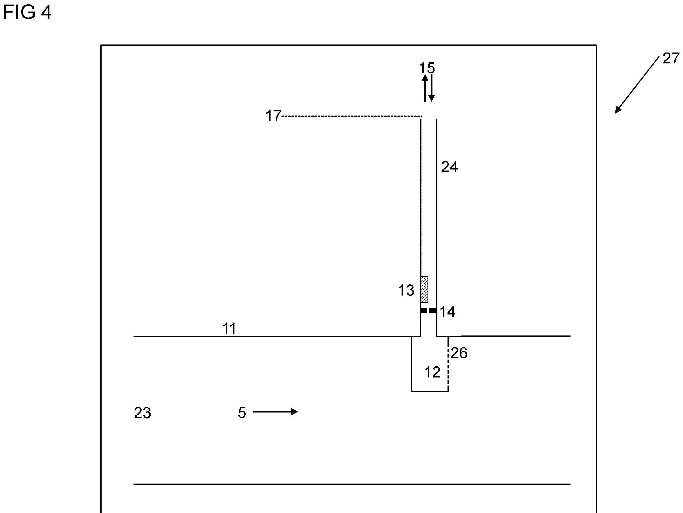

FIG 4 veranschaulicht eine Anordnung, wonach der Lufteinlass 23 des Zufuhrkanales 11 und der Lufteinlass und/oder Luftauslass des Seitenkanales 24 in einem Luftvolumen 27 mit homogener Temperaturverteilung untergebracht sind. Dabei ist eine Anordnung mit dem Massenstromsensor 13 ausserhalb des Zufuhrkanales 11 nicht Teil der beanspruchten Erfindung. Vorzugsweise variiert die Temperatur im Luftvolumen 27 mit homogener Temperaturverteilung zwischen Temperaturmaximum und Temperaturminimum um weniger als 2 Kelvin. Weiter bevorzugt variiert die Temperatur im Luftvolumen 27 mit homogener Temperaturverteilung zwischen Temperaturmaximum und Temperaturminimum um weniger als 1 Kelvin. Speziell bevorzugt variiert die Temperatur im Luftvolumen 27 mit homogener Temperaturverteilung zwischen Temperaturmaximum und Temperaturminimum um weniger als 0.5 Kelvin. Eine möglichst homogene Temperaturverteilung im Luftvolumen 27 vermeidet Kondensation, indem Oberflächen des Zufuhrkanales 11 und/oder des Seitenkanales 24 nicht so kalt werden, dass der Taupunkt (wesentlich) unterschritten wird.

Das Luftvolumen 27 mit homogener Temperaturverteilung weist vorteilhaft auch eine homogene Verteilung des Partialdruckes des Wasserdampfes *p_{D}* auf. Es ist angedacht, dass der Partialdruck des Wasserdampfes *p_{D}* in dem Luftvolumen 27 zwischen maximalem Partialdruck und minimalem Partialdruck um weniger als 2 Prozent variiert. Es ferner ist angedacht, dass der Partialdruck des Wasserdampfes *p_{D}* in dem Luftvolumen 27 zwischen maximalem Partialdruck und minimalem Partialdruck um weniger als 1 Prozent variiert. Es ist insbesondere angedacht, dass der Partialdruck des Wasserdampfes *p_{D}* in dem Luftvolumen 27 zwischen maximalem Partialdruck und minimalem Partialdruck um weniger als 0.5 Prozent variiert. Eine möglichst homogene Verteilung des Partialdruckes des Wasserdampfes *p_{D}* im Luftvolumen 27 vermeidet Kondensation. Solche Kondensation wird vermieden, indem der Taupunkt lokal an Oberflächen des Zufuhrkanales 11 und/oder des Seitenkanales 24 nicht wesentlich unterschritten wird.

In dem in FIG 4 gezeigten Beispiel ist ein erstes Ende des Seitenkanales 24 im Zufuhrkanal 11 angeordnet. Ein zweites Ende des Seitenkanales 24, welches verschieden ist vom ersten Ende des Seitenkanales 24, ist ausserhalb des Zufuhrkanales 11 angeordnet. Das Luftvolumen 27 mit homogener Temperaturverteilung umfasst demnach den Lufteinlass 23 des Zufuhrkanales 11 und das zweite Ende des Seitenkanales 24. Ferner ist angedacht, dass das Luftvolumen 27 mit homogener Verteilung des Partialdruckes des Wasserdampfes *p_{D}* den Lufteinlass 23 des Zufuhrkanales 11 und das zweite Ende des Seitenkanales 24 umfasst.

Ebenso sind in FIG 4 das Strömungsbegrenzungselement 14, beispielsweise eine Blende, der Massenstromsensor 13 und die Signalleitung 17 zum Massenstromsensor 13 ausserhalb des Zufuhrkanales 11 angeordnet. Mit anderen Worten, das zweite Ende des Seitenkanales 24, das Strömungsbegrenzungselement 14, der Massenstromsensor 13 und die Signalleitung 17 befinden sich in dem Luftvolumen 27 mit homogener Temperaturverteilung. Vorzugsweise befinden sich diese Elemente innerhalb des Luftvolumens 27 mit homogener Verteilung des Partialdruckes des Wasserdampfes *p_{D}.*

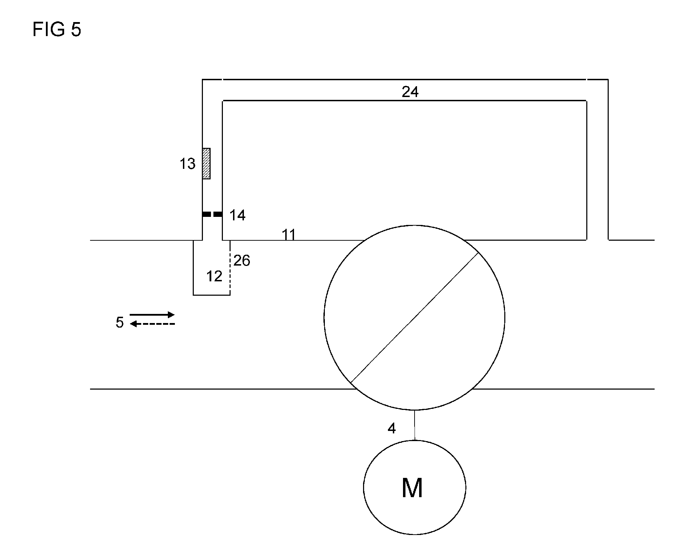

FIG 5 zeigt einen als Umgehungskanal ausgebildeten Seitenkanal 24. Dabei ist eine Anordnung mit dem Massenstromsensor 13 ausserhalb des Zufuhrkanales 11 nicht Teil der beanspruchten Erfindung. Mit anderen Worten, der Seitenkanal 24 weist ein erstes Ende auf, welches mit dem Zufuhrkanal 11 verbunden ist. Vorzugsweise ist das erste Ende des Seitenkanales 24 anhand einer Anschlussstelle 12 mit dem Zufuhrkanal 11 verbunden. Der in FIG 5 gezeigte Seitenkanal 24 weist ein zweites Ende auf. Das zweite Ende des Seitenkanales 24 ist verschieden vom ersten Ende des Seitenkanales 24 und ist ebenfalls verbunden mit dem Zufuhrkanal 11. Das heisst, dass der Seitenkanal 24 an seinem ersten Ende und an seinem zweiten Ende in Fluidverbindung mit dem Zufuhrkanal 11 steht. In dieser Ausführungsform fliesst die Luft zurück in den Zufuhrkanal 11. Dabei ist zwischen Abgriff und Rückführung eine feste oder motorisch verstellbare Strömungsbegrenzung beispielsweise in Form der Klappe 4 im Zufuhrkanal angeordnet.

In einer speziellen Ausführungsform ist der als Umgehungskanal ausgebildete Seitenkanal 24 anhand eines Wärmedämmmaterials thermisch isoliert. Beispielsweise kann der als Umgehungskanal ausgebildete Seitenkanal 24 anhand von Polystyrol isoliert sein. Weiterhin ist angedacht, dass der als Umgehungskanal ausgebildete Seitenkanal 24 anhand mindestens eines Wärmedämmmaterials ausgewählt aus
- Calciumsilikatplatten,
- Mineralwolle wie beispielsweise Glaswolle und/oder Steinwolle,
- Mineralschaumplatten,
- Porenbeton
isoliert ist. Das heisst, dass der als Umgehungskanal ausgebildete Seitenkanal 24 ein Rohr mit einer Innenseite und einer Aussenseite umfasst. An der Aussenseite des Rohres des als Umgehungskanal ausgebildeten Seitenkanales 24 ist ein Wärmedämmmaterial angebracht. An der Aussenseite des Rohres des als Umgehungskanal ausgebildeten Seitenkanales 24 kann insbesondere ein vorgenanntes Wärmedämmmaterial angebracht sein. Eine Wärmedämmung des als Umgehungskanal ausgebildeten Seitenkanales 24 vermeidet Kondensation, indem eine Taupunkttemperatur lokal nicht unterschritten wird.

FIG 4 und FIG 5 zeigen den Massenstromsensor 13 und das Strömungsbegrenzungselement 14 ausserhalb des Zufuhrkanales 11. Gemäss einer Ausführungsform kann mindestens ein Element einer Anordnung ausgewählt aus
- dem Strömungsbegrenzungselement 14, beispielsweise einer Blende,
- dem Massenstromsensor 13,
innerhalb des Zufuhrkanales 11 angebracht sein. Dabei sind der Lufteinlass 23 des Zufuhrkanales 11 und das zweite Ende des Seitenkanales 24 in dem Luftvolumen mit homogener Temperaturverteilung angeordnet. Insbesondere können der Lufteinlass 23 des Zufuhrkanales 11 und das zweite Ende des Seitenkanales 24 in dem Luftvolumen mit homogener Verteilung des Partialdruckes des Wasserdampfes *p_{D}* angeordnet sein.

Gemäss einer weiteren Ausführungsform kann mindestens ein Element ausgewählt aus
- dem Strömungsbegrenzungselement 14, beispielsweise einer Blende,
- dem Massenstromsensor 13,
innerhalb des Zufuhrkanales 11 angebracht sein. Dabei ist der Seitenkanal 24 als Umgehungskanal ausgebildet. Das mindestens eine Element ist in einem Bereich des Seitenkanals angeordnet, der von der Zuluft im Zufuhrkanal umspült ist. Der Seitenkanalteil mit dem mindestens einen Element kann dabei sowohl strömungsaufwärts, also vor der festen oder motorisch verstellbaren Strömungsbegrenzung eingebaut sein. Der Seitenkanalteil mit dem mindestens einen Element kann dabei auch strömungsabwärts, also nach der festen oder motorisch verstellbaren Strömungsbegrenzung eingebaut sein.

Das mindestens eine Element kann den Massenstromsensor 13 umfassen. Das mindestens eine Element kann insbesondere der Massenstromsensor 13 sein.

FIG 1 bis FIG 5 zeigen einen Massenstromsensor 13 im Seitenkanal 24. In einer speziellen Ausführungsform ragt der Massenstromsensor 13 in den Seitenkanal 24 hinein.

Beispielsweise kann der Massenstromsensor 13 mindestens 0.5 Millimeter oder mindestens 1 Millimeter oder mindestens 2 Millimeter in den Seitenkanal 24 hineinragen. Indem der Massenstromsensor 13 in den Seitenkanal 24 hineinragt, werden dessen Sensorelemente zur Erfassung einer Strömungsmenge 15 innerhalb des Seitenkanales 24 positioniert.

In einer weiteren Ausführungsform ist der Massenstromsensor bündig mit der Innenwand des Seitenkanales 24 montiert. Auch bei dieser Positionierung erfassen die Sensorelemente eine Strömungsmenge innerhalb des Seitenkanales 24. Dabei werden Turbulenzen vermieden, die möglicherweise durch die Kante des Sensors hervorgerufen werden. Durch die Vermeidung von Turbulenzen erhält man stabilere Signale.

Der Seitenkanal 24 oder Teile des Seitenkanales 24 werden nach einem Aspekt der vorliegenden Offenbarung mit einem additiven Herstellungsverfahren wie dem dreidimensionalen Druck hergestellt. Die Herstellung des Seitenkanales 24 oder von Teilen des Seitenkanales 24 können in einer speziellen Ausführungsform durch selektives Lasersintern erfolgen.

Mit anderen Worten, die vorliegende Offenbarung lehrt eine erfindungsgemäße Verbrennungsvorrichtung wie in Anspruch 1 definiert, nämlich umfassend einen Brenner (1), einen Seitenkanal (24) und einen Zufuhrkanal (11);
wobei der Seitenkanal (24) einen Einlass, einen Auslass und einen Massenstromsensor (13) zwischen dem Einlass und dem Auslass des Seitenkanales (24) umfasst;
wobei der Massenstromsensor (13) ausgebildet ist, ein Signal entsprechend einer Strömungsmenge (15) eines Fluides durch den Seitenkanal (24) zu erfassen;
wobei der Seitenkanal (24) einen ersten Abschnitt und einen zweiten Abschnitt umfasst;
wobei der erste Abschnitt des Seitenkanales (24) den Massenstromsensor (13) umfasst; und
wobei der erste Abschnitt des Seitenkanales (24) innerhalb des Zufuhrkanales (11) angeordnet ist.

Der zweite Abschnitt des Seitenkanales (24) ist vorzugsweise ausserhalb des Zufuhrkanales (11) angeordnet. In einer Ausführungsform grenzt der zweite Abschnitt des Seitenkanales (24) an den Zufuhrkanal (11).

Der Zufuhrkanal (11) umfasst vorzugsweise einen Luftzufuhrkanal. Der Zufuhrkanal (11) ist idealerweise ein Luftzufuhrkanal.

Das Fluid ist gemäss einer Ausführungsform Luft.

Der Massenstromsensor (13) ist vorzugsweise ein anemometrischer Massenstromsensor. In einer Ausführungsform ist der Massenstromsensor (13) ausgebildet, unter konstanter Leistung das Signal entsprechend der Strömungsmenge (15) des Fluides durch den Seitenkanal (24) zu erfassen. In einer anderen Ausführungsform ist der Massenstromsensor (13) ausgebildet, unter konstanter Temperatur das Signal entsprechend der Strömungsmenge (15) des Fluides durch den Seitenkanal (24) zu erfassen. Insbesondere wird das Signal entsprechend der Strömungsmenge (15) des Fluides durch den Seitenkanal unter konstanter Übertemperatur zu einer Umgebung erfasst.

In einer Ausführungsform umfasst der Seitenkanal (24) einen Messkanal. In einer speziellen Ausführungsform ist der Seitenkanal (24) ein Messkanal. Der Seitenkanal (24) ist verschieden vom Zufuhrkanal (11). Der Seitenkanal (24) ist verschieden vom Brenner (1). Der Zufuhrkanal (11) ist verschieden vom Brenner (1).

Der Einlass des Seitenkanales (24) ist verschieden vom Auslass des Seitenkanales (24). Insbesondere kann der Seitenkanal (24) ein erstes Ende und ein zweites Ende aufweisen, wobei das zweite Ende verschieden ist vom ersten Ende und das zweite Ende dem ersten Ende gegenüberliegt. Der Einlass des Seitenkanales (24) ist angeordnet am ersten Ende des Seitenkanales (24). Der Auslass des Seitenkanales (24) ist angeordnet am zweiten Ende des Seitenkanales (24).

Der erste Abschnitt des Seitenkanales (24) ist so innerhalb des Zufuhrkanales (11) angeordnet, dass der Massenstromsensor (13) innerhalb des Zufuhrkanales (11) angeordnet ist. Der erste Abschnitt des Seitenkanales (24) ragt vorzugsweise so in den Zufuhrkanal (11) hinein, dass der Massenstromsensor (13) innerhalb des Zufuhrkanales (11) angeordnet ist.

Der erste Abschnitt des Seitenkanales (24) ist verschieden vom zweiten Abschnitt des Seitenkanales (24).

Der erste Abschnitt des Seitenkanales (24) umfasst vorzugsweise den Einlass des Seitenkanales (24) vorzugsweise in Form der Anschlussstelle (12) und/oder der Öffnungen (26) der Anschlussstelle (12). Der zweite Abschnitt des Seitenkanales (24) umfasst idealerweise den Auslass des Seitenkanales (24). Es ist vorgesehen, dass der zweite Abschnitt des Seitenkanales (24) ausserhalb des Zufuhrkanales (11) angeordnet ist.

Die vorliegende Offenbarung lehrt ferner eine der vorgenannten Verbrennungsvorrichtungen,
wobei der erste Abschnitt des Seitenkanales (24) mindestens ein Strömungsbegrenzungselement (14) umfasst; und
wobei das mindestens eine Strömungsbegrenzungselement (14) den ersten Abschnitt weiter unterteilt in einen dritten dem Massenstromsensor (13) zugewandten und einen vierten dem Massenstromsensor (13) abgewandten Abschnitt und eine Durchtrittsfläche für einen Durchtritt des Fluides zwischen dem dritten Abschnitt des Seitenkanales (24) und dem vierten Abschnitt des Seitenkanales (24) aufweist.

Der erste Abschnitt des Seitenkanales (24) ist so innerhalb des Zufuhrkanales (11) angeordnet, dass das mindestens eine Strömungsbegrenzungselement (14) innerhalb des Zufuhrkanales (11) angeordnet ist. Der erste Abschnitt des Seitenkanales (24) ragt vorzugsweise so in den Zufuhrkanal (11) hinein, dass das mindestens eine Strömungsbegrenzungselement (14) innerhalb des Zufuhrkanales (11) angeordnet ist.

Gemäss einer Ausführungsform umfasst das mindestens eine Strömungsbegrenzungselement (14) eine Blende, beispielsweise eine motorisch verstellbare Blende. Gemäss einer speziellen Ausführungsform ist das mindestens eine Strömungsbegrenzungselement (14) eine Blende, beispielsweise eine motorisch verstellbare Blende.

Der dritte Abschnitt des Seitenkanales (24) ist verschieden vom vierten Abschnitt des Seitenkanales (24).

Die vorliegende Offenbarung lehrt auch eine der vorgenannten Verbrennungsvorrichtungen unter Einbeziehung mindestens eines Strömungsbegrenzungselementes (14),
wobei das mindestens eine Strömungsbegrenzungselement (14) mindestens einen halben Millimeter in den Seitenkanal (24) hineinragt.

Die vorliegende Offenbarung lehrt weiterhin eine der vorgenannten Verbrennungsvorrichtungen unter Einbeziehung mindestens eines Strömungsbegrenzungselementes (14),
wobei das mindestens eine Strömungsbegrenzungselement (14) mindestens einen Millimeter in den Seitenkanal (24) hineinragt.

Die vorliegende Offenbarung lehrt ferner eine der vorgenannten Verbrennungsvorrichtungen unter Einbeziehung mindestens eines Strömungsbegrenzungselementes (14),
wobei das mindestens eine Strömungsbegrenzungselement (14) mindestens zwei Millimeter in den Seitenkanal (24) hineinragt.

Indem das mindestens eine Strömungsbegrenzungselement (14) in den Seitenkanal (24) hineinragt, wirkt das mindestens eine Strömungsbegrenzungselement (14) auf die Strömungsmenge (15) des Fluides durch den Seitenkanal (24). Mithin kann ein Anstieg der Strömungsmenge (15), welcher zur Betauung des Massenstromsensors (13) führen kann, vermieden werden. Die reduzierte Strömungsmenge (15) kann ferner die Staubbelastung reduzieren. Ausserdem kann die Strömungsgeschwindigkeit über dem Sensor (13) so angepasst werden, dass die Signale eine gute Auswertung (Auflösung) ermöglichen.

Die vorliegende Offenbarung lehrt ferner eine der vorgenannten Verbrennungsvorrichtungen,
wobei der erste Abschnitt des Seitenkanales (24) mindestens zehn Millimeter in den Zufuhrkanal (11) hineinragt.

In einer Ausführungsform ragt der erste Abschnitt des Seitenkanales (24) mindestens dreissig Millimeter in den Zufuhrkanal (11) hinein. In einer weiteren Ausführungsform ragt der erste Abschnitt des Seitenkanales (24) mindestens fünfzig Millimeter in den Zufuhrkanal (11) hinein. Indem der erste Abschnitt des Seitenkanales (24) in den Zufuhrkanal (11) hineinragt, wird eine Betauung des Massenstromsensors (13) vermieden. Eine Betauung wird vermieden, weil der Massenstromsensor (13) damit auf gleicher Temperatur gehalten wird wie das Fluid.

Die vorliegende Offenbarung lehrt ferner eine der vorgenannten Verbrennungsvorrichtungen,
wobei der Zufuhrkanal (11) eine Innenseite und eine Innenwand aufweist;
wobei an der Innenseite des Zufuhrkanales (11) die Innenwand des Zufuhrkanales (11) angeordnet ist und die Innenwand des Zufuhrkanales (11) die Innenseite des Zufuhrkanales (11) umgibt; und
wobei ein kürzester Abstand zwischen der Innenwand des Zufuhrkanales (11) und dem Massenstromsensor (13) mindestens einen Millimeter beträgt.

Die vorliegende Offenbarung lehrt auch eine der vorgenannten Verbrennungsvorrichtungen,
wobei der Zufuhrkanal (11) eine Innenseite aufweist;
wobei an der Innenseite des Zufuhrkanales (11) eine Innenwand des Zufuhrkanales (11) angeordnet ist und die Innenwand des Zufuhrkanales (11) die Innenseite des Zufuhrkanales (11) umgibt; und
wobei ein kürzester Abstand zwischen der Innenwand des Zufuhrkanales (11) und dem Massenstromsensor (13) mindestens drei Millimeter beträgt.

Die vorliegende Offenbarung lehrt weiterhin eine der vorgenannten Verbrennungsvorrichtungen,
wobei der Zufuhrkanal (11) eine Innenseite aufweist;
wobei an der Innenseite des Zufuhrkanales (11) eine Innenwand des Zufuhrkanales (11) angeordnet ist und die Innenwand des Zufuhrkanales (11) die Innenseite des Zufuhrkanales (11) umgibt; und
wobei ein kürzester Abstand zwischen der Innenwand des Zufuhrkanales (11) und dem Massenstromsensor (13) mindestens zehn Millimeter beträgt.

Die vorliegende Offenbarung lehrt ferner eine der vorgenannten Verbrennungsvorrichtungen,
wobei der Zufuhrkanal (11) eine Innenseite und eine zylindrische Innenwand aufweist;
wobei an der Innenseite des Zufuhrkanales (11) die zylindrische Innenwand des Zufuhrkanales (11) angeordnet ist und die zylindrische Innenwand des Zufuhrkanales (11) die Innenseite des Zufuhrkanales (11) umgibt; und
wobei ein kürzester Abstand zwischen der zylindrischen Innenwand des Zufuhrkanales (11) und dem Massenstromsensor (13) mindestens einen Millimeter beträgt.

Die vorliegende Offenbarung lehrt ausserdem eine der vorgenannten Verbrennungsvorrichtungen,
wobei der Zufuhrkanal (11) eine Innenseite und eine zylindrische Innenwand aufweist;
wobei an der Innenseite des Zufuhrkanales (11) die zylindrische Innenwand des Zufuhrkanales (11) angeordnet ist und die zylindrische Innenwand des Zufuhrkanales (11) die Innenseite des Zufuhrkanales (11) umgibt; und
wobei ein kürzester Abstand zwischen der zylindrischen Innenwand des Zufuhrkanales (11) und dem Massenstromsensor (13) mindestens drei Millimeter beträgt.

Die vorliegende Offenbarung lehrt darüber hinaus eine der vorgenannten Verbrennungsvorrichtungen,
wobei der Zufuhrkanal (11) eine Innenseite und eine zylindrische Innenwand aufweist;
wobei an der Innenseite des Zufuhrkanales (11) die zylindrische Innenwand des Zufuhrkanales (11) angeordnet ist und die zylindrische Innenwand des Zufuhrkanales (11) die Innenseite des Zufuhrkanales (11) umgibt; und
wobei ein kürzester Abstand zwischen der zylindrischen Innenwand des Zufuhrkanales (11) und dem Massenstromsensor (13) mindestens zehn Millimeter beträgt.

Der Seitenkanal (24) umfasst vorzugsweise nicht die Innenwand des Zufuhrkanales (11). Die Innenwand des Zufuhrkanales (11) ist idealerweise verschieden vom Seitenkanal (24).

Ein ausreichender Abstand des Massenstromsensors (13) von der Innenwand des Zufuhrkanales (11) trägt weiter zur Vermeidung einer Betauung des Massenstromsensors (13) bei.

Die vorliegende Offenbarung lehrt ferner eine der vorgenannten Verbrennungsvorrichtungen unter Einbeziehung mindestens eines Strömungsbegrenzungselementes (14),
wobei der Zufuhrkanal (11) eine Innenseite und eine Innenwand aufweist;
wobei an der Innenseite des Zufuhrkanales (11) die Innenwand des Zufuhrkanales (11) angeordnet ist und die Innenwand des Zufuhrkanales (11) die Innenseite des Zufuhrkanales (11) umgibt; und
wobei ein kürzester Abstand zwischen der Innenwand des Zufuhrkanales (11) und dem mindestens einen Strömungsbegrenzungselement (14) mindestens einen Millimeter beträgt.

Die vorliegende Offenbarung lehrt auch eine der vorgenannten Verbrennungsvorrichtungen unter Einbeziehung mindestens eines Strömungsbegrenzungselementes (14),
wobei der Zufuhrkanal (11) eine Innenseite aufweist;
wobei an der Innenseite des Zufuhrkanales (11) eine Innenwand des Zufuhrkanales (11) angeordnet ist und die Innenwand des Zufuhrkanales (11) die Innenseite des Zufuhrkanales (11) umgibt; und
wobei ein kürzester Abstand zwischen der Innenwand des Zufuhrkanales (11) und dem mindestens einen Strömungsbegrenzungselement (14) mindestens drei Millimeter beträgt.

Die vorliegende Offenbarung lehrt weiterhin eine der vorgenannten Verbrennungsvorrichtungen unter Einbeziehung mindestens eines Strömungsbegrenzungselementes (14),
wobei der Zufuhrkanal (11) eine Innenseite aufweist;
wobei an der Innenseite des Zufuhrkanales (11) eine Innenwand des Zufuhrkanales (11) angeordnet ist und die Innenwand des Zufuhrkanales (11) die Innenseite des Zufuhrkanales (11) umgibt; und
wobei ein kürzester Abstand zwischen der Innenwand des Zufuhrkanales (11) und dem mindestens einen Strömungsbegrenzungselement (14) mindestens zehn Millimeter beträgt.

Die vorliegende Offenbarung lehrt ferner eine der vorgenannten Verbrennungsvorrichtungen unter Einbeziehung mindestens eines Strömungsbegrenzungselementes (14),
wobei der Zufuhrkanal (11) eine Innenseite und eine zylindrische Innenwand aufweist;
wobei an der Innenseite des Zufuhrkanales (11) die zylindrische Innenwand des Zufuhrkanales (11) angeordnet ist und die zylindrische Innenwand des Zufuhrkanales (11) die Innenseite des Zufuhrkanales (11) umgibt; und
wobei ein kürzester Abstand zwischen der zylindrischen Innenwand des Zufuhrkanales (11) und dem mindestens einen Strömungsbegrenzungselement (14) mindestens einen Millimeter beträgt.

Die vorliegende Offenbarung lehrt ausserdem eine der vorgenannten Verbrennungsvorrichtungen unter Einbeziehung mindestens eines Strömungsbegrenzungselementes (14),
wobei der Zufuhrkanal (11) eine Innenseite und eine zylindrische Innenwand aufweist;
wobei an der Innenseite des Zufuhrkanales (11) die zylindrische Innenwand des Zufuhrkanales (11) angeordnet ist und die zylindrische Innenwand des Zufuhrkanales (11) die Innenseite des Zufuhrkanales (11) umgibt; und
wobei ein kürzester Abstand zwischen der zylindrischen Innenwand des Zufuhrkanales (11) und dem mindestens einen Strömungsbegrenzungselement (14) mindestens drei Millimeter beträgt.

Die vorliegende Offenbarung lehrt darüber hinaus eine der vorgenannten Verbrennungsvorrichtungen unter Einbeziehung mindestens eines Strömungsbegrenzungselementes (14),
wobei der Zufuhrkanal (11) eine Innenseite und eine zylindrische Innenwand aufweist;
wobei an der Innenseite des Zufuhrkanales (11) die zylindrische Innenwand des Zufuhrkanales (11) angeordnet ist und die zylindrische Innenwand des Zufuhrkanales (11) die Innenseite des Zufuhrkanales (11) umgibt; und
wobei ein kürzester Abstand zwischen der zylindrischen Innenwand des Zufuhrkanales (11) und dem mindestens einen Strömungsbegrenzungselement (14) mindestens zehn Millimeter beträgt.

Ein ausreichender Abstand des mindestens einen Strömungsbegrenzungselementes (14) von der Innenwand des Zufuhrkanales (11) trägt weiter zur Vermeidung einer Betauung des Massenstromsensors (13) bei.

Die vorliegende Offenbarung lehrt ferner eine der vorgenannten Verbrennungsvorrichtungen unter Einbeziehung mindestens eines Strömungsbegrenzungselementes (14) und unter Einbeziehung einer Innenwand des Zufuhrkanales (11),
wobei ein kürzester Abstand zwischen der Innenwand des Zufuhrkanales (11) und dem Massenstromsensor (13) mindestens einen Millimeter beträgt; und
wobei ein kürzester Abstand zwischen der Innenwand des Zufuhrkanales (11) und dem mindestens einen Strömungsbegrenzungselement (14) mindestens fünf Millimeter beträgt.

Die vorliegende Offenbarung lehrt zudem eine der vorgenannten Verbrennungsvorrichtungen unter Einbeziehung mindestens eines Strömungsbegrenzungselementes (14) und unter Einbeziehung einer Innenwand des Zufuhrkanales (11),
wobei ein kürzester Abstand zwischen der Innenwand des Zufuhrkanales (11) und dem Massenstromsensor (13) mindestens fünf Millimeter beträgt; und
wobei ein kürzester Abstand zwischen der Innenwand des Zufuhrkanales (11) und dem mindestens einen Strömungsbegrenzungselement (14) mindestens einen Millimeter beträgt.

Die vorliegende Offenbarung lehrt auch eine der vorgenannten Verbrennungsvorrichtungen unter Einbeziehung mindestens eines Strömungsbegrenzungselementes (14) und unter Einbeziehung einer Innenwand des Zufuhrkanales (11),
wobei der Zufuhrkanal (11) eine Innenseite aufweist;
wobei an der Innenseite des Zufuhrkanales (11) die Innenwand des Zufuhrkanales (11) angeordnet ist und die Innenwand des Zufuhrkanales (11) die Innenseite des Zufuhrkanales (11) umgibt;
wobei ein kürzester Abstand zwischen der Innenwand des Zufuhrkanales (11) und dem Massenstromsensor (13) mindestens drei Millimeter beträgt; und
wobei ein kürzester Abstand zwischen der Innenwand des Zufuhrkanales (11) und dem mindestens einen Strömungsbegrenzungselement (14) mindestens drei Millimeter beträgt.

Die vorliegende Offenbarung lehrt weiterhin eine der vorgenannten Verbrennungsvorrichtungen unter Einbeziehung mindestens eines Strömungsbegrenzungselementes (14) und unter Einbeziehung einer Innenwand des Zufuhrkanales (11),
wobei der Zufuhrkanal (11) eine Innenseite aufweist;
wobei an der Innenseite des Zufuhrkanales (11) die Innenwand des Zufuhrkanales (11) angeordnet ist und die Innenwand des Zufuhrkanales (11) die Innenseite des Zufuhrkanales (11) umgibt;
wobei ein kürzester Abstand zwischen der Innenwand des Zufuhrkanales (11) und dem Massenstromsensor (13) mindestens zehn Millimeter beträgt; und
wobei ein kürzester Abstand zwischen der Innenwand des Zufuhrkanales (11) und dem mindestens einen Strömungsbegrenzungselement (14) mindestens zehn Millimeter beträgt.

Die vorliegende Offenbarung lehrt ferner eine der vorgenannten Verbrennungsvorrichtungen unter Einbeziehung mindestens eines Strömungsbegrenzungselementes (14),
wobei der Zufuhrkanal (11) eine Innenseite und eine zylindrische Innenwand aufweist;
wobei an der Innenseite des Zufuhrkanales (11) die zylindrische Innenwand des Zufuhrkanales (11) angeordnet ist und die zylindrische Innenwand des Zufuhrkanales (11) die Innenseite des Zufuhrkanales (11) umgibt;
wobei ein kürzester Abstand zwischen der zylindrischen Innenwand des Zufuhrkanales (11) und dem Massenstromsensor (13) mindestens einen Millimeter beträgt; und
wobei ein kürzester Abstand zwischen der zylindrischen Innenwand des Zufuhrkanales (11) und dem mindestens einen Strömungsbegrenzungselement (14) mindestens fünf Millimeter beträgt.

Die vorliegende Offenbarung lehrt zudem eine der vorgenannten Verbrennungsvorrichtungen unter Einbeziehung mindestens eines Strömungsbegrenzungselementes (14),
wobei der Zufuhrkanal (11) eine Innenseite und eine zylindrische Innenwand aufweist;
wobei an der Innenseite des Zufuhrkanales (11) die zylindrische Innenwand des Zufuhrkanales (11) angeordnet ist und die zylindrische Innenwand des Zufuhrkanales (11) die Innenseite des Zufuhrkanales (11) umgibt;
wobei ein kürzester Abstand zwischen der zylindrischen Innenwand des Zufuhrkanales (11) und dem Massenstromsensor (13) mindestens fünf Millimeter beträgt; und
wobei ein kürzester Abstand zwischen der zylindrischen Innenwand des Zufuhrkanales (11) und dem mindestens einen Strömungsbegrenzungselement (14) mindestens einen Millimeter beträgt.

Die vorliegende Offenbarung lehrt ausserdem eine der vorgenannten Verbrennungsvorrichtungen unter Einbeziehung mindestens eines Strömungsbegrenzungselementes (14),
wobei der Zufuhrkanal (11) eine Innenseite und eine zylindrische Innenwand aufweist;
wobei an der Innenseite des Zufuhrkanales (11) die zylindrische Innenwand des Zufuhrkanales (11) angeordnet ist und die zylindrische Innenwand des Zufuhrkanales (11) die Innenseite des Zufuhrkanales (11) umgibt;
wobei ein kürzester Abstand zwischen der zylindrischen Innenwand des Zufuhrkanales (11) und dem Massenstromsensor (13) mindestens drei Millimeter beträgt; und
wobei ein kürzester Abstand zwischen der zylindrischen Innenwand des Zufuhrkanales (11) und dem mindestens einen Strömungsbegrenzungselement (14) mindestens drei Millimeter beträgt.

Die vorliegende Offenbarung lehrt darüber hinaus eine der vorgenannten Verbrennungsvorrichtungen unter Einbeziehung mindestens eines Strömungsbegrenzungselementes (14),
wobei der Zufuhrkanal (11) eine Innenseite und eine zylindrische Innenwand aufweist;
wobei an der Innenseite des Zufuhrkanales (11) die zylindrische Innenwand des Zufuhrkanales (11) angeordnet ist und die zylindrische Innenwand des Zufuhrkanales (11) die Innenseite des Zufuhrkanales (11) umgibt;
wobei ein kürzester Abstand zwischen der zylindrischen Innenwand des Zufuhrkanales (11) und dem Massenstromsensor (13) mindestens zehn Millimeter beträgt; und
wobei ein kürzester Abstand zwischen der zylindrischen Innenwand des Zufuhrkanales (11) und dem mindestens einen Strömungsbegrenzungselement (14) mindestens zehn Millimeter beträgt.

Ein ausreichender Abstand des Massenstromsensors (13) und des mindestens einen Strömungsbegrenzungselementes (14) von der Innenwand des Zufuhrkanales (11) trägt zur Vermeidung einer Betauung des Massenstromsensors (13) bei.

Die vorliegende Offenbarung lehrt ferner eine der vorgenannten Verbrennungsvorrichtungen,
wobei der Massenstromsensor (13) bündig mit einer Innenwand des Seitenkanales (24) abschliesst oder in den Seitenkanal (24) hineinragt.

Insbesondere lehrt die vorliegende Offenbarung eine der vorgenannten Verbrennungsvorrichtungen,
wobei eine Innenwand des Seitenkanales (24) eine Vertiefung aufweist; und
wobei der Massenstromsensor (13) in der Vertiefung angeordnet ist.

Ferner lehrt die vorliegende Offenbarung eine der vorgenannten Verbrennungsvorrichtungen,
wobei eine Innenwand des Seitenkanales (24) eine Vertiefung aufweist;
wobei der Massenstromsensor (13) so in der Vertiefung angeordnet ist, dass der Massenstromsensor (13) bündig mit der Innenwand des Seitenkanales (24) abschliesst.

Die vorliegende Offenbarung lehrt auch eine der vorgenannten Verbrennungsvorrichtungen,
wobei der Massenstromsensor (13) mindestens einen halben Millimeter in den Seitenkanal (24) hineinragt.

Die vorliegende Offenbarung lehrt weiterhin eine der vorgenannten Verbrennungsvorrichtungen,
wobei der Massenstromsensor (13) mindestens einen Millimeter in den Seitenkanal (24) hineinragt.

Die vorliegende Offenbarung lehrt ferner eine der vorgenannten Verbrennungsvorrichtungen,
wobei der Massenstromsensor (13) mindestens zwei Millimeter in den Seitenkanal (24) hineinragt.

Der Massenstromsensor (13) schliesst bündig mit einer Innenwand des Seitenkanales (24) ab oder ragt in den Seitenkanal (24) hinein. Mithin sind dessen Sensorelemente positioniert zum Erfassen des Signales entsprechend der Strömungsmenge (15) des Fluides durch den Seitenkanal (24).

Die vorliegende Offenbarung lehrt ferner eine der vorgenannten Verbrennungsvorrichtungen,
wobei die Verbrennungsvorrichtung eine Signalleitung (17) umfasst, welche mit dem Massenstromsensor (13) verbunden ist;
wobei die Signalleitung (17) einen ersten Abschnitt aufweist; und
wobei der erste Abschnitt der Signalleitung (17) in einer Wand des Seitenkanales (24) eingebettet ist.

Vorzugsweise ist die Wand des Seitenkanales (24) eine Aussenwand des Seitenkanales (24).

Die vorliegende Offenbarung lehrt ausserdem eine der vorgenannten Verbrennungsvorrichtungen,
wobei die Verbrennungsvorrichtung eine Signalleitung (17) umfasst, welche mit dem Massenstromsensor (13) elektrisch verbunden ist;
wobei die Signalleitung (17) einen ersten Abschnitt aufweist; und
wobei der erste Abschnitt der Signalleitung (17) in einer Wand des Seitenkanales (24) eingebettet ist.

Vorzugsweise ist die Wand des Seitenkanales (24) eine Aussenwand des Seitenkanales (24).

Die vorliegende Offenbarung lehrt zudem eine der vorgenannten Verbrennungsvorrichtungen,
wobei die Verbrennungsvorrichtung eine Signalleitung (17) umfasst, welche mit dem Massenstromsensor (13) galvanisch verbunden ist;
wobei die Signalleitung (17) einen ersten Abschnitt aufweist; und
wobei der erste Abschnitt der Signalleitung (17) in einer Wand des Seitenkanales (24) eingebettet ist.

Vorzugsweise ist die Wand des Seitenkanales (24) eine Aussenwand des Seitenkanales (24).

Die vorliegende Offenbarung lehrt darüber hinaus eine der vorgenannten Verbrennungsvorrichtungen,
wobei die Verbrennungsvorrichtung eine Signalleitung (17) umfasst, welche mit dem Massenstromsensor (13) optisch verbunden ist;
wobei die Signalleitung (17) einen ersten Abschnitt aufweist; und
wobei der erste Abschnitt der Signalleitung (17) in einer Wand des Seitenkanales (24) eingebettet ist.

Vorzugsweise ist die Wand des Seitenkanales (24) eine Aussenwand des Seitenkanales (24).

Die vorliegende Offenbarung lehrt ferner eine der vorgenannten Verbrennungsvorrichtungen,
wobei die Verbrennungsvorrichtung eine Signalleitung (17) umfasst, welche mit dem Massenstromsensor (13) verbunden ist;
wobei die Signalleitung (17) einen ersten Abschnitt aufweist; und
wobei der erste Abschnitt der Signalleitung (17) innerhalb des Seitenkanales (24) angeordnet ist.

Die Signalleitung (17) ist vorzugsweise elektrisch mit dem Massenstromsensor (13) verbunden. Die Signalleitung (17) ist idealerweise elektrisch und mechanisch mit dem Massenstromsensor (13) verbunden. Es ist angedacht, dass die Signalleitung (17) direkt mit dem Massenstromsensor (13) verbunden ist. Es ist insbesondere angedacht, dass die Signalleitung (17) direkt und elektrisch mit dem Massenstromsensor (13) verbunden ist. Es ist darüber hinaus vorgesehen, dass die Signalleitung (17) direkt und elektrisch und mechanisch mit dem Massenstromsensor (13) verbunden ist.

Die vorliegende Offenbarung lehrt auch eine der vorgenannten Verbrennungsvorrichtungen,
wobei der Zufuhrkanal (11) eine Innenseite, welche einen Innenraum des Zufuhrkanales (11) definiert, aufweist;
wobei die Verbrennungsvorrichtung eine Signalleitung (17) umfasst, welche mit dem Massenstromsensor (13) verbunden ist;
wobei die Signalleitung (17) einen ersten Abschnitt aufweist; und
wobei der erste Abschnitt der Signalleitung (17) innerhalb des Seitenkanales (24) oder in einer Wand des Seitenkanales (24) angeordnet ist.

Die vorliegende Offenbarung lehrt ferner eine der vorgenannten Verbrennungsvorrichtungen,
wobei der Zufuhrkanal (11) eine Innenseite, welche einen Innenraum des Zufuhrkanales (11) definiert, aufweist;
wobei die Verbrennungsvorrichtung eine Signalleitung (17) umfasst, welche mit dem Massenstromsensor (13) elektrisch verbunden ist;
wobei die Signalleitung (17) einen ersten Abschnitt aufweist; und
wobei der erste Abschnitt der Signalleitung (17) innerhalb des Seitenkanales (24) oder in einer Wand des Seitenkanales (24) angeordnet ist.

Die vorliegende Offenbarung lehrt zudem eine der vorgenannten Verbrennungsvorrichtungen,
wobei der Zufuhrkanal (11) eine Innenseite, welche einen Innenraum des Zufuhrkanales (11) definiert, aufweist;
wobei die Verbrennungsvorrichtung eine Signalleitung (17) umfasst, welche mit dem Massenstromsensor (13) galvanisch verbunden ist;
wobei die Signalleitung (17) einen ersten Abschnitt aufweist; und
wobei der erste Abschnitt der Signalleitung (17) innerhalb des Seitenkanales (24) oder in einer Wand des Seitenkanales (24) angeordnet ist.

Die vorliegende Offenbarung lehrt darüber hinaus eine der vorgenannten Verbrennungsvorrichtungen,
wobei der Zufuhrkanal (11) eine Innenseite, welche einen Innenraum des Zufuhrkanales (11) definiert, aufweist;
wobei die Verbrennungsvorrichtung eine Signalleitung (17) umfasst, welche mit dem Massenstromsensor (13) optisch verbunden ist;
wobei die Signalleitung (17) einen ersten Abschnitt aufweist; und
wobei der erste Abschnitt der Signalleitung (17) innerhalb des Seitenkanales (24) oder in einer Wand des Seitenkanales (24) angeordnet ist.

Die vorliegende Offenbarung lehrt ferner eine der vorgenannten Verbrennungsvorrichtungen,
wobei der Zufuhrkanal (11) mit dem Brenner (1) in Fluidverbindung ist.

Die vorliegende Offenbarung lehrt auch eine der vorgenannten Verbrennungsvorrichtungen,
wobei der Zufuhrkanal (11) mit dem Brenner (1) in direkter Fluidverbindung ist.

Die vorliegende Offenbarung lehrt weiterhin eine der vorgenannten Verbrennungsvorrichtungen,
wobei der Zufuhrkanal (11) in den Brenner (1) mündet.

Die vorliegende Offenbarung lehrt ferner eine der vorgenannten Verbrennungsvorrichtungen,
wobei der Zufuhrkanal (11) direkt in den Brenner (1) mündet.

Die vorliegende Offenbarung lehrt ferner eine der vorgenannten Verbrennungsvorrichtungen,
wobei der Seitenkanal (24) über eine Anschlussstelle (12) mit dem Zufuhrkanal (11) in Fluidverbindung ist.

Vorzugsweise umfasst die Anschlussstelle (12) den Einlass oder den Auslass. Idealerweise ist die Anschlussstelle (12) der Einlass oder der Auslass.

Die vorliegende Offenbarung lehrt ferner eine der vorgenannten Verbrennungsvorrichtungen,
wobei der Seitenkanal (24) über eine oder mehrere Öffnungen (26) der Anschlussstelle (12) mit dem Zufuhrkanal (11) in Fluidverbindung ist.

Die vorliegende Offenbarung lehrt auch eine der vorgenannten Verbrennungsvorrichtungen,
wobei der Seitenkanal (24) über die Anschlussstelle (12) mit dem Zufuhrkanal (11) in direkter Fluidverbindung ist.

Die vorliegende Offenbarung lehrt auch eine der vorgenannten Verbrennungsvorrichtungen,
wobei der Seitenkanal (24) über eine oder mehrere Öffnungen (26) der Anschlussstelle (12) mit dem Zufuhrkanal (11) in direkter Fluidverbindung ist.

Die vorliegende Offenbarung lehrt weiterhin eine der vorgenannten Verbrennungsvorrichtungen,
wobei der erste Abschnitt des Seitenkanales (24) die Anschlussstelle (12) umfasst; und
wobei der erste Abschnitt des Seitenkanales (24) über die Anschlussstelle (12) mit dem Zufuhrkanal (11) in Fluidverbindung ist.

Die vorliegende Offenbarung lehrt weiterhin eine der vorgenannten Verbrennungsvorrichtungen,
wobei der erste Abschnitt des Seitenkanales (24) die Anschlussstelle (12) umfasst; und
wobei der erste Abschnitt des Seitenkanales (24) über eine oder mehrere Öffnungen (26) der Anschlussstelle (12) mit dem Zufuhrkanal (11) in Fluidverbindung ist.

Die vorliegende Offenbarung lehrt ferner eine der vorgenannten Verbrennungsvorrichtungen,
wobei der erste Abschnitt des Seitenkanales (24) die Anschlussstelle (12) umfasst; und
wobei der erste Abschnitt des Seitenkanales (24) über die Anschlussstelle (12) mit dem Zufuhrkanal (11) in direkter Fluidverbindung ist.

Die vorliegende Offenbarung lehrt weiterhin eine der vorgenannten Verbrennungsvorrichtungen,
wobei der erste Abschnitt des Seitenkanales (24) die Anschlussstelle (12) umfasst; und
wobei der erste Abschnitt des Seitenkanales (24) über eine oder mehrere Öffnungen (26) der Anschlussstelle (12) mit dem Zufuhrkanal (11) in direkter Fluidverbindung ist.

Die vorliegende Offenbarung lehrt ferner eine der vorgenannten Verbrennungsvorrichtungen,
wobei der Zufuhrkanal (11) und Seitenkanal (24) in einem Volumen mit homogener Temperaturverteilung angeordnet sind.

Vorzugsweise ist ein Abstand zwischen dem Einlass (23) des Zufuhrkanales, der Klappe (4) oder der Luftklappe (4) des Zufuhrkanales (11) und dem Seitenkanal (24) möglichst gering. Dies erleichtert eine Anordnung des Einlasses (23) des Zufuhrkanales, der Klappe (4) oder Luftklappe (4) des Zufuhrkanales (11) und des Seitenkanales (24) in einem Volumen mit homogener Temperaturverteilung. Dadurch verringert sich die Gefahr von Kondensation am Massenstromsensor (13), weil es unwahrscheinlich wird, dass das Fluid auf seinem Weg durch den Seitenkanal (24) seinen Taupunkt erreicht.

Die vorliegende Offenbarung lehrt ferner eine der vorgenannten Verbrennungsvorrichtungen,
wobei der Zufuhrkanal (11) einen Einlass (23) aufweist; und
wobei ein kürzester Abstand zwischen dem Einlass (23) des Zufuhrkanales (11) und dem Seitenkanal (24) weniger als eintausend Millimeter beträgt.

Die vorliegende Offenbarung lehrt insbesondere eine der vorgenannten Verbrennungsvorrichtungen,
wobei der Zufuhrkanal (11) einen Einlass (23) aufweist; und
wobei ein kürzester Abstand zwischen dem Einlass (23) des Zufuhrkanales (11) und dem Seitenkanal (24) weniger als fünfhundert Millimeter beträgt.

Die vorliegende Offenbarung lehrt auch eine der vorgenannten Verbrennungsvorrichtungen,
wobei der Zufuhrkanal (11) einen Einlass (23) aufweist; und
wobei ein kürzester Abstand zwischen dem Einlass (23) des Zufuhrkanales (11) und dem Seitenkanal (24) weniger als zweihundert Millimeter beträgt.

Vorzugsweise ist ein Abstand zwischen dem Einlass (23) des Zufuhrkanales (11) und dem Seitenkanal (24) möglichst gering. Dies ermöglicht eine Anordnung des Einlasses (23) des Zufuhrkanales (11) und des Seitenkanales (24) in einem Volumen mit homogener Temperaturverteilung. Dadurch verringert sich die Gefahr von Kondensation am Massenstromsensor (13), weil es unwahrscheinlich wird, dass das Fluid auf seinem Weg durch den Seitenkanal (24) seinen Taupunkt erreicht.

Die vorliegende Offenbarung lehrt ferner eine der vorgenannten Verbrennungsvorrichtungen,
wobei der Auslass des Seitenkanales (24) ausserhalb des Zufuhrkanales (11) angeordnet ist;
wobei der Zufuhrkanal (11) einen Einlass (23) aufweist; und
wobei ein kürzester Abstand zwischen dem Einlass (23) des Zufuhrkanales (11) und dem Seitenkanal (24) weniger als eintausend Millimeter beträgt.

Der Einlass (23) des Zufuhrkanales (11) ist verschieden vom Auslass des Seitenkanales (24). Der Auslass des Seitenkanales (24) ist vorzugsweise ausgebildet für den Austritt des Fluides aus dem Seitenkanal (24). Der Auslass des Seitenkanales (24) ist vorzugsweise ausgebildet für den Austritt von Luft aus dem Seitenkanal (24).

Die vorliegende Offenbarung lehrt auch eine der vorgenannten Verbrennungsvorrichtungen,
wobei der Auslass des Seitenkanales (24) ausserhalb des Zufuhrkanales (11) angeordnet ist;
wobei der Zufuhrkanal (11) einen Einlass (23) aufweist; und
wobei ein kürzester Abstand zwischen dem Einlass (23) des Zufuhrkanales (11) und dem Seitenkanal (24) weniger als fünfhundert Millimeter beträgt.

Die vorliegende Offenbarung lehrt weiterhin eine der vorgenannten Verbrennungsvorrichtungen,
wobei der Auslass des Seitenkanales (24) ausserhalb des Zufuhrkanales (11) angeordnet ist;
wobei der Zufuhrkanal (11) einen Einlass (23) aufweist; und
wobei ein kürzester Abstand zwischen dem Einlass (23) des Zufuhrkanales (11) und dem Seitenkanal (24) weniger als zweihundert Millimeter beträgt.

Die vorliegende Offenbarung lehrt weiterhin eine der vorgenannten Verbrennungsvorrichtungen,
wobei der Auslass des Seitenkanales (24) in Fluidverbindung steht mit dem Einlass des Seitenkanales (24).

Die vorliegende Offenbarung lehrt ferner eine der vorgenannten Verbrennungsvorrichtungen,
wobei der Seitenkanal (24) ein erstes und ein zweites Ende umfasst;
wobei das zweite Ende des Seitenkanales (24) verschieden ist vom ersten Ende des Seitenkanales (24) und das zweite Ende des Seitenkanales (24) dem ersten Ende des Seitenkanales (24) gegenüberliegt; und
wobei das erste Ende des Seitenkanales (24) eine Anschlussstelle (12) in Form des Einlasses des Seitenkanales (24) umfasst und das zweite Ende des Seitenkanales den Auslass des Seitenkanales (24) umfasst.

Die vorliegende Offenbarung lehrt zudem eine der vorgenannten Verbrennungsvorrichtungen,
wobei der Seitenkanal (24) ein erstes und ein zweites Ende umfasst;
wobei das zweite Ende des Seitenkanales (24) verschieden ist vom ersten Ende des Seitenkanales (24) und das zweite Ende des Seitenkanales (24) dem ersten Ende des Seitenkanales (24) gegenüberliegt; und
wobei das erste Ende des Seitenkanales (24) eine Anschlussstelle (12) in Form des Einlasses des Seitenkanales (24) ist und das zweite Ende des Seitenkanales der Auslass des Seitenkanales (24) ist.

Die vorliegende Offenbarung lehrt ferner eine der vorgenannten Verbrennungsvorrichtungen,
wobei der Seitenkanal (24) ein erstes und ein zweites Ende umfasst;
wobei das zweite Ende des Seitenkanales (24) verschieden ist vom ersten Ende des Seitenkanales (24) und das zweite Ende des Seitenkanales (24) dem ersten Ende des Seitenkanales (24) gegenüberliegt; und
wobei das erste Ende des Seitenkanales (24) eine Anschlussstelle (12) in Form des Auslasses des Seitenkanales (24) umfasst und das zweite Ende des Seitenkanales den Einlass des Seitenkanales (24) umfasst.

Die vorliegende Offenbarung lehrt zudem eine der vorgenannten Verbrennungsvorrichtungen,
wobei der Seitenkanal (24) ein erstes und ein zweites Ende umfasst;
wobei das zweite Ende des Seitenkanales (24) verschieden ist vom ersten Ende des Seitenkanales (24) und das zweite Ende des Seitenkanales (24) dem ersten Ende des Seitenkanales (24) gegenüberliegt; und
wobei das erste Ende des Seitenkanales (24) eine Anschlussstelle (12) in Form des Auslasses des Seitenkanales (24) ist und das zweite Ende des Seitenkanales der Einlass des Seitenkanales (24) ist.

Die vorliegende Offenbarung lehrt zudem eine der vorgenannten Verbrennungsvorrichtungen,
wobei eine oder die Anschlussstelle (12) den Einlass des Seitenkanales (24) und wobei der Zufuhrkanal (11) eine Klappe (4) umfasst;
wobei der Seitenkanal (24) über die Anschlussstelle (12) mit dem Zufuhrkanal (11) in Fluidverbindung ist;
wobei der Seitenkanal (24) über den Auslass des Seitenkanales (24) mit dem Zufuhrkanal (11) in Fluidverbindung ist; und
wobei die Klappe (4) im Zufuhrkanal (11) zwischen dem Einlass und dem Auslass des Seitenkanales (24) angeordnet ist.

Die vorliegende Offenbarung lehrt insbesondere eine der vorgenannten Verbrennungsvorrichtungen,
wobei eine oder die Anschlussstelle (12) den Einlass des Seitenkanales (24) und wobei der Zufuhrkanal (11) eine Klappe (4) umfasst;
wobei der Seitenkanal (24) über eine oder mehrere Öffnungen (26) der Anschlussstelle (12) mit dem Zufuhrkanal (11) in Fluidverbindung ist;
wobei der Seitenkanal (24) über den Auslass des Seitenkanales (24) mit dem Zufuhrkanal (11) in Fluidverbindung ist; und
wobei die Klappe (4) im Zufuhrkanal (11) zwischen dem Einlass und dem Auslass des Seitenkanales (24) angeordnet ist.

Die vorliegende Offenbarung lehrt ausserdem eine der vorgenannten Verbrennungsvorrichtungen,
wobei eine oder die Anschlussstelle (12) den Einlass des Seitenkanales (24) und wobei der Zufuhrkanal (11) eine Luftklappe (4) umfasst;
wobei der Seitenkanal (24) über die Anschlussstelle (12) mit dem Zufuhrkanal (11) in Fluidverbindung ist;
wobei der Seitenkanal (24) über den Auslass des Seitenkanales (24) mit dem Zufuhrkanal (11) in Fluidverbindung ist; und
wobei die Luftklappe (4) im Zufuhrkanal (11) zwischen dem Einlass und dem Auslass des Seitenkanales (24) angeordnet ist.

Die vorliegende Offenbarung lehrt darüber hinaus eine der vorgenannten Verbrennungsvorrichtungen,
wobei eine oder die Anschlussstelle (12) den Einlass des Seitenkanales (24) und wobei der Zufuhrkanal (11) eine Luftklappe (4) umfasst;
wobei der Seitenkanal (24) über eine oder mehrere Öffnungen (26) der Anschlussstelle (12) mit dem Zufuhrkanal (11) in Fluidverbindung ist;
wobei der Seitenkanal (24) über den Auslass des Seitenkanales (24) mit dem Zufuhrkanal (11) in Fluidverbindung ist; und
wobei die Luftklappe (4) im Zufuhrkanal (11) zwischen dem Einlass und dem Auslass des Seitenkanales (24) angeordnet ist.

Die vorliegende Offenbarung lehrt zudem eine der vorgenannten Verbrennungsvorrichtungen,
wobei eine oder die Anschlussstelle (12) den Auslass des Seitenkanales (24) und wobei der Zufuhrkanal (11) eine Klappe (4) umfasst;
wobei der Seitenkanal (24) über die Anschlussstelle (12) mit dem Zufuhrkanal (11) in Fluidverbindung ist;
wobei der Seitenkanal (24) über den Einlass des Seitenkanales (24) mit dem Zufuhrkanal (11) in Fluidverbindung ist; und
wobei die Klappe (4) im Zufuhrkanal (11) zwischen dem Einlass und dem Auslass des Seitenkanales (24) angeordnet ist.

Die vorliegende Offenbarung lehrt insbesondere eine der vorgenannten Verbrennungsvorrichtungen,
wobei eine oder die Anschlussstelle (12) den Auslass des Seitenkanales (24) und wobei der Zufuhrkanal (11) eine Klappe (4) umfasst;
wobei der Seitenkanal (24) über eine oder mehrere Öffnungen (26) der Anschlussstelle (12) mit dem Zufuhrkanal (11) in Fluidverbindung ist;
wobei der Seitenkanal (24) über den Einlass des Seitenkanales (24) mit dem Zufuhrkanal (11) in Fluidverbindung ist; und
wobei die Klappe (4) im Zufuhrkanal (11) zwischen dem Einlass und dem Auslass des Seitenkanales (24) angeordnet ist.

Die vorliegende Offenbarung lehrt ausserdem eine der vorgenannten Verbrennungsvorrichtungen,
wobei eine oder die Anschlussstelle (12) den Auslass des Seitenkanales (24) und wobei der Zufuhrkanal (11) eine Luftklappe (4) umfasst;
wobei der Seitenkanal (24) über die Anschlussstelle (12) mit dem Zufuhrkanal (11) in Fluidverbindung ist;
wobei der Seitenkanal (24) über den Einlass des Seitenkanales (24) mit dem Zufuhrkanal (11) in Fluidverbindung ist; und
wobei die Luftklappe (4) im Zufuhrkanal (11) zwischen dem Einlass und dem Auslass des Seitenkanales (24) angeordnet ist.

Die vorliegende Offenbarung lehrt darüber hinaus eine der vorgenannten Verbrennungsvorrichtungen,
wobei eine oder die Anschlussstelle (12) den Auslass des Seitenkanales (24) und wobei der Zufuhrkanal (11) eine Luftklappe (4) umfasst;
wobei der Seitenkanal (24) über eine oder mehrere Öffnungen (26) der Anschlussstelle (12) mit dem Zufuhrkanal (11) in Fluidverbindung ist;
wobei der Seitenkanal (24) über den Einlass des Seitenkanales (24) mit dem Zufuhrkanal (11) in Fluidverbindung ist; und
wobei die Luftklappe (4) im Zufuhrkanal (11) zwischen dem Einlass und dem Auslass des Seitenkanales (24) angeordnet ist.

Die vorliegende Offenbarung lehrt ferner eine der vorgenannten Verbrennungsvorrichtungen,
wobei der Seitenkanal (24) über den Einlass des Seitenkanales (24) mit dem Zufuhrkanal (11) in Fluidverbindung ist; und
wobei der Seitenkanal (24) über den Auslass des Seitenkanales (24) mit dem Zufuhrkanal (11) in Fluidverbindung ist.

Die vorliegende Offenbarung lehrt zudem eine der vorgenannten Verbrennungsvorrichtungen,
wobei der Seitenkanal (24) über eine oder mehrere Öffnungen des Einlasses des Seitenkanales (24) mit dem Zufuhrkanal (11) in Fluidverbindung ist; und
wobei der Seitenkanal (24) über eine oder mehrere Öffnungen des Auslasses des Seitenkanales (24) mit dem Zufuhrkanal (11) in Fluidverbindung ist.

Die vorliegende Offenbarung lehrt ferner eine Verbrennungsvorrichtung,
wobei der Massenstromsensor (13) und/oder das Strömungsbegrenzungselement (14) ausserhalb des Zufuhrkanales (11) angeordnet sind;
wobei der Seitenkanal (24) über den Einlass des Seitenkanales (24) mit dem Zufuhrkanal (11) in Fluidverbindung ist; und
wobei der Seitenkanal (24) über den Auslass des Seitenkanales (24) mit dem Zufuhrkanal (11) in Fluidverbindung ist.

Vorzugsweise sind Zufuhrkanal (11) und Massenstromsensor (13) und/oder das Strömungsbegrenzungselement (14) dabei in einem Volumen mit im Wesentlichen homogener Temperaturverteilung angeordnet. Idealerweise sind Zufuhrkanal (11) und Massenstromsensor (13) und/oder das Strömungsbegrenzungselement (14) dabei in einem Volumen mit homogener Temperaturverteilung angeordnet.

Die vorliegende Offenbarung lehrt ferner eine Verbrennungsvorrichtung,
wobei der Massenstromsensor (13) und/oder das Strömungsbegrenzungselement (14) ausserhalb des Zufuhrkanales (11) angeordnet sind;
wobei der Seitenkanal (24) über eine oder mehrere Öffnungen des Einlasses des Seitenkanales (24) mit dem Zufuhrkanal (11) in Fluidverbindung ist; und
wobei der Seitenkanal (24) über eine oder mehrere Öffnungen des Auslasses des Seitenkanales (24) mit dem Zufuhrkanal (11) in Fluidverbindung ist.

Vorzugsweise sind Zufuhrkanal (11) und Massenstromsensor (13) und/oder das Strömungsbegrenzungselement (14) dabei in einem Volumen mit im Wesentlichen homogener Temperaturverteilung angeordnet. Idealerweise sind Zufuhrkanal (11) und Massenstromsensor (13) und/oder das Strömungsbegrenzungselement (14) dabei in einem Volumen mit homogener Temperaturverteilung angeordnet.

Die vorliegende Offenbarung lehrt auch eine der vorgenannten Verbrennungsvorrichtungen, in welchen der Auslass des Seitenkanales (24) mit dem Zufuhrkanal (11) verbindbar oder verbunden ist,
wobei der Seitenkanal (24) über den Einlass des Seitenkanales (24) mit dem Zufuhrkanal (11) in direkter Fluidverbindung ist; und
wobei der Seitenkanal (24) über den Auslass des Seitenkanales (24) mit dem Zufuhrkanal (11) in direkter Fluidverbindung ist.

Die vorliegende Offenbarung lehrt zudem eine der vorgenannten Verbrennungsvorrichtungen, in welchen der Auslass des Seitenkanales (24) mit dem Zufuhrkanal (11) verbindbar oder verbunden ist,
wobei der Seitenkanal (24) über eine oder mehrere Öffnungen eines Einlasses des Seitenkanales (24) mit dem Zufuhrkanal (11) in direkter Fluidverbindung ist; und
wobei der Seitenkanal (24) über eine oder mehrere Öffnungen eines Auslasses des Seitenkanales (24) mit dem Zufuhrkanal (11) in direkter Fluidverbindung ist.

Der Einlass des Seitenkanales (24) ist vorzugsweise verschieden vom Auslass des Seitenkanales (24). Insbesondere kann der Seitenkanal (24) ein erstes und ein zweites Ende aufweisen, wobei das zweite Ende des Seitenkanales (24) verschieden ist vom ersten Ende des Seitenkanales (24). Das erste Ende des Seitenkanales (24) ist oder umfasst den Einlass des Seitenkanales (24). Das zweite Ende des Seitenkanales (24) ist oder umfasst den Auslass des Seitenkanales (24).

Die vorliegende Offenbarung lehrt auch eine Verbrennungsvorrichtung, in welchen der Auslass des Seitenkanales (24) mit dem Zufuhrkanal (11) verbindbar oder verbunden ist,
wobei der Massenstromsensor (13) und/oder das Strömungsbegrenzungselement (14) ausserhalb des Zufuhrkanales (11) angeordnet sind;
wobei der Seitenkanal (24) über den Einlass des Seitenkanales (24) mit dem Zufuhrkanal (11) in direkter Fluidverbindung ist; und
wobei der Seitenkanal (24) über den Auslass des Seitenkanales (24) mit dem Zufuhrkanal (11) in direkter Fluidverbindung ist.

Vorzugsweise sind Zufuhrkanal (11) und Massenstromsensor (13) und/oder das Strömungsbegrenzungselement (14) dabei in einem Volumen mit im Wesentlichen homogener Temperaturverteilung angeordnet. Idealerweise sind Zufuhrkanal (11) und Massenstromsensor (13) und/oder das Strömungsbegrenzungselement (14) dabei in einem Volumen mit homogener Temperaturverteilung angeordnet.

Die vorliegende Offenbarung lehrt zudem eine Verbrennungsvorrichtung, in welchen der Auslass des Seitenkanales (24) mit dem Zufuhrkanal (11) verbindbar oder verbunden ist,
wobei der Massenstromsensor (13) und/oder das Strömungsbegrenzungselement (14) ausserhalb des Zufuhrkanales (11) angeordnet sind;
wobei der Seitenkanal (24) über eine oder mehrere Öffnungen des Einlasses des Seitenkanales (24) mit dem Zufuhrkanal (11) in direkter Fluidverbindung ist; und
wobei der Seitenkanal (24) über eine oder mehrere Öffnungen des Auslasses des Seitenkanales (24) mit dem Zufuhrkanal (11) in direkter Fluidverbindung ist. Vorzugsweise sind Zufuhrkanal (11) und Massenstromsensor (13) und/oder das Strömungsbegrenzungselement (14) dabei in einem Volumen mit im Wesentlichen homogener Temperaturverteilung angeordnet. Idealerweise sind Zufuhrkanal (11) und Massenstromsensor (13) und/oder das Strömungsbegrenzungselement (14) dabei in einem Volumen mit homogener Temperaturverteilung angeordnet.

Die vorliegende Offenbarung lehrt ferner eine der vorgenannten Verbrennungsvorrichtungen, in welchen der Auslass des Seitenkanales (24) mit dem Zufuhrkanal (11) in Fluidverbindung ist,
wobei der Auslass des Seitenkanales (24) ausgebildet ist, das Fluid aus dem Seitenkanal (24) direkt in den Zufuhrkanal (11) ausströmen zu lassen.

Die vorliegende Offenbarung lehrt auch eine der vorgenannten Verbrennungsvorrichtungen, in welchen der Auslass des Seitenkanales (24) mit dem Zufuhrkanal (11) in Fluidverbindung ist,
wobei der Einlass des Seitenkanales (24) ausgebildet ist, das Fluid aus dem Zufuhrkanal (11) direkt in den Seitenkanal (24) einströmen zu lassen.

Die vorliegende Offenbarung lehrt zudem eine der vorgenannten Verbrennungsvorrichtungen, in welchen der Auslass des Seitenkanales (24) mit dem Zufuhrkanal (11) in Fluidverbindung ist,
wobei eine oder mehrere Öffnungen des Einlasses des Seitenkanales (24) ausgebildet sind, das Fluid aus dem Zufuhrkanal (11) direkt in den Seitenkanal (24) einströmen zu lassen.

Die vorliegende Offenbarung lehrt weiterhin eine der vorgenannten Verbrennungsvorrichtungen, in welchen der Auslass des Seitenkanales (24) mit dem Zufuhrkanal (11) in Fluidverbindung ist,
wobei der Einlass des Seitenkanales (24) ausgebildet ist, das Fluid aus dem Zufuhrkanal (11) direkt in den Seitenkanal (24) einströmen zu lassen; und
wobei der Auslass des Seitenkanales (24) ausgebildet ist, das Fluid aus dem Seitenkanal (24) direkt in den Zufuhrkanal (11) zurückströmen zu lassen.

Die vorliegende Offenbarung lehrt ferner eine der vorgenannten Verbrennungsvorrichtungen, in welchen der Auslass des Seitenkanales (24) mit dem Zufuhrkanal (11) in Fluidverbindung ist,
wobei eine oder mehrere Öffnungen des Einlasses des Seitenkanales (24) ausgebildet sind, das Fluid aus dem Zufuhrkanal (11) direkt in den Seitenkanal (24) einströmen zu lassen; und
wobei eine oder mehrere Öffnungen des Auslasses des Seitenkanales (24) ausgebildet sind, das Fluid aus dem Seitenkanal (24) direkt in den Zufuhrkanal (11) zurückströmen zu lassen.

Die vorliegende Offenbarung lehrt ferner eine der vorgenannten Verbrennungsvorrichtungen,
wobei die Verbrennungsvorrichtung eine wärmedämmende Schicht aufweist;
wobei der Seitenkanal (24) einen fünften Abschnitt, der ausserhalb des Zufuhrkanales (11) angeordnet ist, aufweist;
wobei der Massenstromsensor (13) im fünften Abschnitt angeordnet ist; und
wobei aussen an dem fünften Abschnitt des Seitenkanales (24) die wärmedämmende Schicht angeordnet ist.

In einer Ausführungsform umfasst der fünfte Abschnitt des Seitenkanales (24) den zweiten Abschnitt des Seitenkanales (24). In einer speziellen Ausführungsform ist der fünfte Abschnitt des Seitenkanales (24) der zweite Abschnitt des Seitenkanales (24).

In einer Ausführungsform umfasst der fünfte Abschnitt den zweiten Abschnitt des Seitenkanales (24) und Teile des ersten Abschnitts des Seitenkanales (24) beispielsweise den Massenstromsensor (13) und/oder das Strömungsbegrenzungselement (14).

Es ist angedacht, dass die wärmedämmende Schicht mindestens eines der Materialien
- Polystyrol,
- Calciumsilikatplatten,
- Mineralwolle wie beispielsweise Glaswolle und/oder Steinwolle,
- Mineralschaumplatten,
- Porenbeton
umfasst.

Es ist weiterhin angedacht, dass die wärmedämmende Schicht aus genau einem der Materialien
- Polystyrol,
- Calciumsilikatplatten,
- Mineralwolle wie beispielsweise Glaswolle und/oder Steinwolle,
- Mineralschaumplatten,
- Porenbeton
besteht.

In einer Ausführungsform weist die wärmedämmende Schicht eine Dicke von mindestens zwei Millimetern oder von mindestens fünf Millimetern oder von mindestens zehn Millimetern auf. In einer speziellen Ausführungsform weist die wärmedämmende Sicht in einer radialen Richtung ausgehend vom fünften Abschnitt des Seitenkanales (24) eine Dicke von mindestens zwei Millimetern oder von mindestens fünf Millimetern oder von mindestens zehn Millimetern auf.

Eine wärmedämmende Schicht aussen am Seitenkanal (24) begrenzt eine Abkühlung von Oberflächen des Seitenkanales (24) auf Temperaturen unterhalb des Taupunktes des im Fluid enthaltenen Wasserdampfes. Insbesondere begrenzt die wärmedämmende Schicht aussen am Seitenkanal (24) eine Abkühlung von Oberflächen des Seitenkanales (24) auf Temperaturen unterhalb des Taupunktes des in der Zuluft enthaltenen Wasserdampfes. Eine Kondensation am Massenstromsensor (13) wird mithin vermieden.

Das Genannte bezieht sich auf einzelne Ausführungsformen der Offenbarung. Verschiedene Änderungen an den Ausführungsformen können vorgenommen werden, ohne von der zu Grunde liegenden Idee abzuweichen und ohne den Rahmen dieser Offenbarung zu verlassen. Der Gegenstand der vorliegenden Erfindung ist definiert über die Ansprüche. Es können verschiedenste Änderungen vorgenommen werden, ohne den Schutzbereich der folgenden Ansprüche zu verlassen.

### Bezugszeichen

1 Brenner
2 Wärmeverbraucher
3 Gebläse
4 Luftklappe
5 Luftzufuhr
6 Brennstoffzufuhr
7, 8 Sicherheitsabsperrventile
9 Brennstoffklappe
10 Abgasstrom
11 Zufuhrkanal
12 Anschlussstelle
13 Massenstromsensor
14 Strömungsbegrenzungselement
15 Strömungsmenge
16 Regel- und/oder Steuer- und/oder Überwachungseinrichtung
17 - 22 Signalleitungen
23 Lufteinlass
24 Seitenkanal
25 Abgasweg
26 Öffnungen der Anschlussstelle
27 homogenes Luftvolumen

## Patentansprüche

1. Verbrennungsvorrichtung umfassend einen Brenner (1), einen Seitenkanal (24) und einen Zufuhrkanal (11);
wobei der Seitenkanal (24) einen Einlass, einen Auslass und einen Massenstromsensor (13) zwischen dem Einlass und dem Auslass des Seitenkanales (24) umfasst;
wobei der Massenstromsensor (13) ausgebildet ist, ein Signal entsprechend einer Strömungsmenge (15) eines Fluides durch den Seitenkanal (24) zu erfassen;
**dadurch gekennzeichnet, dass**
der Seitenkanal (24) einen ersten Abschnitt und einen zweiten Abschnitt umfasst;
wobei der erste Abschnitt des Seitenkanales (24) den Massenstromsensor (13) umfasst; und
wobei der erste Abschnitt des Seitenkanales (24) innerhalb des Zufuhrkanales (11) angeordnet ist.

2. Die Verbrennungsvorrichtung nach Anspruch 1,
wobei der erste Abschnitt des Seitenkanales (24) mindestens ein Strömungsbegrenzungselement (14) umfasst; und
wobei das mindestens eine Strömungsbegrenzungselement (14) den ersten Abschnitt weiter unterteilt in einen dritten dem Massenstromsensor (13) zugewandten und einen vierten dem Massenstromsensor (13) abgewandten Abschnitt und eine Durchtrittsfläche für einen Durchtritt des Fluides zwischen dem dritten Abschnitt des Seitenkanales (24) und dem vierten Abschnitt des Seitenkanales (24) aufweist.

3. Die Verbrennungsvorrichtung gemäss einem der Ansprüche 1 bis 2,
wobei der erste Abschnitt des Seitenkanales (24) mindestens zehn Millimeter in den Zufuhrkanal (11) hineinragt.

4. Die Verbrennungsvorrichtung gemäss einem der Ansprüche 1 bis 3,
wobei der Zufuhrkanal (11) eine Innenseite und eine Innenwand aufweist;
wobei an der Innenseite des Zufuhrkanales (11) die Innenwand des Zufuhrkanales (11) angeordnet ist und die Innenwand des Zufuhrkanales (11) die Innenseite des Zufuhrkanales (11) umgibt; und
wobei ein kürzester Abstand zwischen der Innenwand des Zufuhrkanales (11) und dem Massenstromsensor (13) mindestens einen Millimeter beträgt.

5. Die Verbrennungsvorrichtung nach einem der Ansprüche 1 bis 4,
wobei der Zufuhrkanal (11) eine Innenseite und eine Innenwand aufweist;
wobei an der Innenseite des Zufuhrkanales (11) die Innenwand des Zufuhrkanales (11) angeordnet ist und die Innenwand des Zufuhrkanales (11) die Innenseite des Zufuhrkanales (11) umgibt; und
wobei ein kürzester Abstand zwischen der Innenwand des Zufuhrkanales (11) und dem mindestens einen Strömungsbegrenzungselement (14) mindestens einen Millimeter beträgt.

6. Die Verbrennungsvorrichtung nach den Ansprüchen 4 und 5,
wobei ein kürzester Abstand zwischen der Innenwand des Zufuhrkanales (11) und dem Massenstromsensor (13) mindestens einen Millimeter beträgt; und
wobei ein kürzester Abstand zwischen der Innenwand des Zufuhrkanales (11) und dem mindestens einen Strömungsbegrenzungselement (14) mindestens fünf Millimeter beträgt.

7. Die Verbrennungsvorrichtung gemäss einem der Ansprüche 1 bis 6,
wobei der Massenstromsensor (13) bündig mit der Innenwand des Seitenkanales (24) abschliesst oder in den Seitenkanal (24) hineinragt.

8. Die Verbrennungsvorrichtung gemäss einem der Ansprüche 1 bis 7,
wobei die Verbrennungsvorrichtung eine Signalleitung (17) umfasst, welche mit dem Massenstromsensor (13) verbunden ist;
wobei die Signalleitung (17) einen ersten Abschnitt aufweist; und
wobei der erste Abschnitt der Signalleitung (17) in einer Wand des Seitenkanales (24) eingebettet ist.

9. Die Verbrennungsvorrichtung gemäss einem der Ansprüche 1 bis 8,
wobei der Zufuhrkanal (11) mit dem Brenner (1) in Fluidverbindung ist.

10. Die Verbrennungsvorrichtung gemäss einem der Ansprüche 1 bis 9,
wobei der Seitenkanal (24) über eine Anschlussstelle (12) mit dem Zufuhrkanal (11) in Fluidverbindung ist.

11. Die Verbrennungsvorrichtung gemäss einem der Ansprüche 1 bis 10,
wobei der Zufuhrkanal (11) einen Einlass (23) aufweist; und
wobei ein kürzester Abstand zwischen dem Einlass (23) des Zufuhrkanales (11) und dem Seitenkanal (24) weniger als eintausend Millimeter beträgt.

12. Die Verbrennungsvorrichtung gemäss einem der Ansprüche 1 bis 11,
wobei der Auslass des Seitenkanales (24) in Fluidverbindung steht mit dem Einlass des Seitenkanales (24).

13. Die Verbrennungsvorrichtung gemäss einem der Ansprüche 1 bis 12,
wobei eine oder die Anschlussstelle (12) den Einlass des Seitenkanales (24) und wobei der Zufuhrkanal (11) eine Klappe (4) umfasst;
wobei der Seitenkanal (24) über die Anschlussstelle (12) mit dem Zufuhrkanal (11) in Fluidverbindung ist;
wobei der Seitenkanal (24) über den Auslass des Seitenkanales (24) mit dem Zufuhrkanal (11) in Fluidverbindung ist; und
wobei die Klappe (4) im Zufuhrkanal (11) zwischen dem Einlass und dem Auslass des Seitenkanales (24) angeordnet ist.

14. Die Verbrennungsvorrichtung gemäss einem der Ansprüche 1 bis 13,
wobei der Seitenkanal (24) ein erstes und ein zweites Ende umfasst;
wobei das zweite Ende des Seitenkanales (24) verschieden ist vom ersten Ende des Seitenkanales (24) und das zweite Ende des Seitenkanales (24) dem ersten Ende des Seitenkanales (24) gegenüberliegt; und
wobei das erste Ende des Seitenkanales (24) eine Anschlussstelle (12) in Form des Einlasses des Seitenkanales (24) umfasst und das zweite Ende des Seitenkanales den Auslass des Seitenkanales (24) umfasst.

15. Die Verbrennungsvorrichtung gemäss einem der Ansprüche 1 bis 13,
wobei der Seitenkanal (24) ein erstes und ein zweites Ende umfasst;
wobei das zweite Ende des Seitenkanales (24) verschieden ist vom ersten Ende des Seitenkanales (24) und das zweite Ende des Seitenkanales (24) dem ersten Ende des Seitenkanales (24) gegenüberliegt; und
wobei das erste Ende des Seitenkanales (24) eine Anschlussstelle (12) in Form des Auslasses des Seitenkanales (24) umfasst und das zweite Ende des Seitenkanales den Einlass des Seitenkanales (24) umfasst.

## Claims

1. combustion apparatus comprising a burner (1), a side duct (24) and a feed duct (11);
wherein the side duct (24) comprises an inlet, an outlet and a mass flow sensor (13) between the inlet and the outlet of the side duct (24);
wherein the mass flow sensor (13) is embodied to detect a signal corresponding to an amount of flow (15) of a fluid through the side duct (24);
**characterised in that**
the side duct (24) comprises a first portion and a second portion;
wherein the first portion of the side duct (24) comprises the mass flow sensor (13); and
wherein the first portion of the side duct (24) is arranged within the feed duct (11).

2. The combustion apparatus according to claim 1,
wherein the first portion of the side duct (24) comprises at least one flow restriction element (14); and
wherein the at least one flow restriction element (14) further subdivides the first portion into a third portion facing toward the mass flow sensor (13) and a fourth portion facing away from the mass flow sensor (13) and has a passage surface for a passage of the fluid between the third portion of the side duct (24) and the fourth portion of the side duct (24).

3. The combustion apparatus according to one of claims 1 to 2,
wherein the first portion of the side duct (24) projects at least ten millimetres into the feed duct (11).

4. The combustion apparatus according to one of claims 1 to 3,
wherein the feed duct (11) has an inner side and an inner wall;
wherein the inner wall of the feed duct (11) is arranged on the inner side of the feed duct (11) and the inner wall of the feed duct (11) surrounds the inner side of the feed duct (11); and
wherein a shortest distance between the inner wall of the feed duct (11) and the mass flow sensor (13) amounts to at least one millimetre.

5. The combustion apparatus according to one of claims 1 to **4,**
wherein the feed duct (11) has an inner side and an inner wall;
wherein the inner wall of the feed duct (11) is arranged on the inner side of the feed duct (11) and the inner wall of the feed duct (11) surrounds the inner side of the feed duct (11); and
wherein a shortest distance between the inner wall of the feed duct (11) and the at least one flow restriction element (14) amounts to at least one millimetre.

6. The combustion apparatus according to claims 4 and 5,
wherein a shortest distance between the inner wall of the feed duct (11) and the mass flow sensor (13) amounts to at least one millimetre; and
wherein a shortest distance between the inner wall of the feed duct (11) and the at least one flow restriction element (14) amounts to at least five millimetres.

7. The combustion apparatus according to one of claims 1 to 6,
wherein the mass flow sensor (13) is flush with the inner wall of the side duct (24) or projects into the side duct (24).

8. The combustion apparatus according to one of claims 1 to 7,
wherein the combustion apparatus comprises a signal line (17), which is connected to the mass flow sensor (13);
wherein the signal line (17) has a first portion; and
wherein the first portion of the signal line (17) is embedded in a wall of the side duct (24).

9. The combustion apparatus according to one of claims 1 to 8,
wherein the feed duct (11) has a fluid connection to the burner (1).

10. The combustion apparatus according to one of claims 1 to 9,
wherein the side duct (24) has a fluid connection to the feed duct (11) via a connection point (12).

11. The combustion apparatus according to one of claims 1 to 10,
wherein the feed duct (11) has an inlet (23); and
wherein a shortest distance between the inlet (23) of the feed duct (11) and the side duct (24) amounts to less than one thousand millimetres.

12. The combustion apparatus according to one of claims 1 to 11,
wherein the outlet of the side duct (24) has a fluid connection to the inlet of the side duct (24).

13. The combustion apparatus according to one of claims 1 to 12,
wherein a or the connection point (12) comprises the inlet of the side duct (24) and wherein the feed duct (11) comprises a flap (4);
wherein the side duct (24) has a fluid connection to the feed duct (11) via the connection point (12);
wherein the side duct (24) has a fluid connection to the feed duct (11) via the outlet of the side duct (24); and
wherein the flap (4) in the feed duct (11) is arranged between the inlet and the outlet of the side duct (24).

14. The combustion apparatus according to one of claims 1 to 13,
wherein the side duct (24) comprises a first and a second end;
wherein the second end of the side duct (24) is different from the first end of the side duct (24) and the second end of the side duct (24) lies opposite the first end of the side duct (24); and
wherein the first end of the side duct (24) comprises a connection point (12) in the form of the inlet of the side duct (24) and the second end of the side duct comprises the outlet of the side duct (24).

15. The combustion apparatus according to one of claims 1 to 13,
wherein the side duct (24) comprises a first and a second end;
wherein the second end of the side duct (24) is different from the first end of the side duct (24) and the second end of the side duct (24) lies opposite the first end of the side duct (24); and
wherein the first end of the side duct (24) comprises a connection point (12) in the form of the outlet of the side duct (24) and the second end of the side duct comprises the inlet of the side duct (24).

## Revendications

1. Dispositif de combustion comprenant un brûleur (1), un canal latéral (24) et un canal d'alimentation (11) ;
dans lequel le canal latéral (24) comprend une entrée, une sortie et un capteur de débit massique (13) entre l'entrée et la sortie du canal latéral (24) ;
dans lequel le capteur de débit massique (13) est configuré pour détecter un signal correspondant à une quantité d'écoulement (15) d'un fluide à travers le canal latéral (24) ;
**caractérisé en ce que**
le canal latéral (24) comprend une première section et une seconde section ;
dans lequel la première section du canal latéral (24) comprend le capteur de débit massique (13) ; et
dans lequel la première section du canal latéral (24) est disposée à l'intérieur du canal d'alimentation (11).

2. Le dispositif de combustion selon la revendication 1,
dans lequel la première section du canal latéral (24) comprend au moins un élément de limitation d'écoulement (14) ; et
dans lequel l'au moins un élément de limitation d'écoulement (14) présente la première section divisée de plus en une troisième section tournée vers le capteur de débit massique (13) et une quatrième section opposée au capteur de débit massique (13) et une surface de passage pour un passage du fluide entre la troisième section du canal latéral (24) et la quatrième section du canal latéral (24).

3. Le dispositif de combustion selon l'une quelconque des revendications 1 à 2,
dans lequel la première section du canal latéral (24) fait saillie d'au moins dix millimètres dans le canal d'alimentation (11).

4. Le dispositif de combustion selon l'une quelconque des revendications 1 à 3,
dans lequel le canal d'alimentation (11) présente une face interne et une paroi interne ;
dans lequel la paroi interne du canal d'alimentation (11) est disposée au niveau de la face interne du canal d'alimentation (11) et la paroi interne du canal d'alimentation (11) entoure la face interne du canal d'alimentation (11) ; et
dans lequel une distance la plus courte entre la paroi interne du canal d'alimentation (11) et le capteur de débit massique (13) s'élève à au moins un millimètre.

5. Le dispositif de combustion selon l'une quelconque des revendications 1 à 4,
dans lequel le canal d'alimentation (11) présente une face interne et une paroi interne ;
dans lequel la paroi interne du canal d'alimentation (11) est disposée au niveau de la face interne du canal d'alimentation (11) et la paroi interne du canal d'alimentation (11) entoure la face interne du canal d'alimentation (11) ; et
dans lequel une distance la plus courte entre la paroi interne du canal d'alimentation (11) et l'au moins un élément de limitation d'écoulement (14) s'élève à au moins un millimètre.

6. Le dispositif de combustion selon l'une quelconque des revendications 4 et 5,
dans lequel une distance la plus courte entre la paroi interne du canal d'alimentation (11) et le capteur de débit massique (13) s'élève à au moins un millimètre ; et
dans lequel une distance la plus courte entre la paroi interne du canal d'alimentation (11) et l'au moins un élément de limitation d'écoulement (14) s'élève à au moins cinq millimètres.

7. Le dispositif de combustion selon l'une quelconque des revendications 1 à 6,
dans lequel le capteur de débit massique (13) se termine à fleur avec la paroi interne du canal latéral (24) ou fait saillie dans le canal latéral (24).

8. Le dispositif de combustion selon l'une quelconque des revendications 1 à 7,
dans lequel le dispositif de combustion comprend un câble de signalisation (17) qui est relié au capteur de débit massique (13) ;
dans lequel le câble de signalisation (17) présente une première section ; et
dans lequel la première section du câble de signalisation (17) est incorporée dans une paroi du canal latéral (24).

9. Le dispositif de combustion selon l'une quelconque des revendications 1 à 8,
dans lequel le canal d'alimentation (11) est en liaison fluidique avec le brûleur (1).

10. Le dispositif de combustion selon l'une quelconque des revendications 1 à 9,
dans lequel le canal latéral (24) est en liaison fluidique par le biais d'un point de raccordement (12) avec le canal d'alimentation (11).

11. Le dispositif de combustion selon l'une quelconque des revendications 1 à 10,
dans lequel le canal d'alimentation (11) présente une entrée (23) ; et
dans lequel une distance la plus courte entre l'entrée (23) du canal d'alimentation (11) et le canal latéral (24) s'élève à moins de mille millimètres.

12. Le dispositif de combustion selon l'une quelconque des revendications 1 à 11,
dans lequel la sortie du canal latéral (24) est en liaison fluidique avec l'entrée du canal latéral (24).

13. Le dispositif de combustion selon l'une quelconque des revendications 1 à 12,
dans lequel un ou le point de raccordement (24) comprend l'entrée du canal latéral (24) et dans lequel le canal d'alimentation (11) comprend un clapet (4) ;
dans lequel le canal latéral (24) est en liaison fluidique avec le canal d'alimentation (11) par le biais du point de raccordement (12) ;
dans lequel le canal latéral (24) est en liaison fluidique avec le canal d'alimentation (11) par le biais de la sortie du canal latéral (24) ; et
dans lequel le clapet (4) est disposé dans le canal d'alimentation (11) entre l'entrée et la sortie du canal latéral (24).

14. Le dispositif de combustion selon l'une quelconque des revendications 1 à 13,
dans lequel le canal latéral (24) comprend une première et une seconde extrémité ;
dans lequel la seconde extrémité du canal latéral (24) est différente de la première extrémité du canal latéral (24) et la seconde extrémité du canal latéral (24) est opposée à la première extrémité du canal latéral (24) ; et
dans lequel la première extrémité du canal d'extrémité (24) comprend un point de raccordement (12) sous forme d'entrée du canal latéral (24) et la seconde extrémité du canal latéral comprend la sortie du canal latéral (24).

15. Le dispositif de combustion selon l'une quelconque des revendications 1 à 13,
dans lequel le canal latéral (24) comprend une première et une seconde extrémité ;
dans lequel la seconde extrémité du canal latéral (24) est différente de la première extrémité du canal latéral (24) et la seconde extrémité du canal latéral (24) est opposée à la première extrémité du canal latéral (24) ; et
dans lequel la première extrémité du canal latéral (24) comprend un point de raccordement (12) sous forme de sortie du canal latéral (24) et la seconde extrémité du canal latéral comprend l'entrée du canal latéral (24).
